# EUROPEAN PATENT APPLICATION

(11) **EP 4 009 627 A1**
(43) Date of publication of application: **08.06.2022**
(21) Application number: 20856961.6
(22) Date of filing: 06.07.2020
(51) Int. Cl.: H04N 5/765, H04N 5/92

(54) **INFORMATION PROCESSING DEVICE, INFORMATION PROCESSING METHOD, AND PROGRAM**

(30) Priority: 29.08.2019 JP 2019157232
(71) Applicant: Sony Group Corporation, Tokyo 108-0075 (JP)
(72) Inventor: WADA, Masahiro, Tokyo 108-0075 (JP); UKIGAYA, Atsuo, Tokyo 108-0075 (JP); IKI, Masaru, Tokyo 108-0075 (JP); UCHIDA, Koichi, Tokyo 108-0075 (JP); MORIGUCHI, Hirokazu, Tokyo 108-0075 (JP)
(74) Representative: D Young & Co LLP
(86) International application number: PCT/JP2020/026380
(87) International publication number: WO 2021/039129

(57) **Abstract**

To provide an environment suitable for editing metadata. For this purpose, an information processing device includes a user interface control unit that performs user interface processing of enabling editing of text information as metadata to be added to an image file by using multiple pieces of glossary data that are an aggregate of term data in which character information and abbreviated input information form a set.

## Description

### TECHNICAL FIELD

The present technology relates to an information processing device, an information processing method, and a program, and particularly relates to a technology for editing metadata assigned to image data.

### BACKGROUND ART

In a case of a user who uses an imaging device (also referred to as "camera") on business, such as a professional photographer or a reporter, an image captured with the imaging device is uploaded to a server (file transfer protocol (FTP) server) of a newspaper company or the like by using a communication function of the imaging device on site (e.g., Patent Document 1).

Furthermore, in a newspaper company and the like, since image data is uploaded from multiple users, the amount of received image data may be enormous. A newspaper company and the like utilize metadata assigned to image data to efficiently search for target image data.

For this purpose, it is conceivable that the user performs an operation of assigning metadata to image data in the imaging device.

### CITATION LIST

### PATENT DOCUMENT

Patent Document 1: Japanese Patent Application Laid-Open No. 2017-138777

### SUMMARY OF THE INVENTION

### PROBLEMS TO BE SOLVED BY THE INVENTION

However, input means included in the imaging device is not suitable for the task of inputting text for assigning metadata, and it is difficult to promptly upload a captured image.

In view of the foregoing, an object of the present technology is to provide an environment suitable for editing metadata for a user, such as a professional photographer, who needs to quickly upload a captured image after assigning metadata to the image.

### SOLUTIONS TO PROBLEMS

An information processing device according to the present technology includes a user interface control unit that performs user interface processing of enabling editing of text information as metadata to be added to an image file by using multiple pieces of glossary data that are an aggregate of term data in which character information and abbreviated input information form a set.

That is, multiple pieces of glossary data can be combined and used for editing metadata.

The user interface control unit in the above-described information processing device may present the character information that is an input candidate from the glossary data on the basis of input information input at the time of editing the text information.

That is, character information corresponding to a case where the input information matches a part of the character information or a part of the abbreviated input information is presented as an input candidate.

The above-described information processing device may include a glossary management unit that acquires the glossary data.

As a result, it is possible to acquire glossary data created by another information processing device, for example.

The glossary management unit in the above-described information processing device may store and manage the glossary data in a storage unit.

As a result, even if the glossary data cannot be acquired from another information processing device due to a poor communication environment, the glossary data stored in the storage unit can be used.

The glossary management unit in the above-described information processing device may manage the enabled state of each pieces of glossary data.

As a result, it is possible to switch between enabled and disabled states for each piece of glossary data.

The user interface control unit in the above-described information processing device may perform processing of providing an environment for switching the enabled state of multiple pieces of the glossary data, and may perform processing of changing the display order of multiple pieces of the glossary data displayed in the environment in which the switching is performed.

As a result, the glossary data that is easy to use for the user can be displayed in a higher order.

In the above-described information processing device, the display order may be in descending order of the number of times of enablement.

As a result, frequently used glossary data is displayed in a higher order in the list.

In the above-described information processing device, the display order may be set in ascending order of elapsed time after disablement.

As a result, the glossary data that has been enabled most recently is displayed in a higher order in the list.

The glossary management unit in the above-described information processing device may acquire the glossary data from a server device through a network.

As a result, glossary data can be acquired from a server device or the like located at a long distance where near field communication is not possible.

The glossary management unit in the above-described information processing device may acquire the glossary data on the basis of a synchronization setting with the server device.

As a result, the glossary data stored in the server device is appropriately downloaded to the information processing device.

In the above-described information processing device, an automatic synchronization setting and a manual synchronization setting may be provided as the synchronization setting.

As a result, the automatic synchronization setting and the manual synchronization setting can be switched according to the situation.

The glossary management unit in the above-described information processing device may select the glossary data acquired from the server device on the basis of position information.

As a result, for example, glossary data according to a place such as an event venue or a baseball stadium is acquired.

The glossary management unit in the above-described information processing device may select the glossary data acquired from the server device on the basis of time information.

As a result, for example, appropriate glossary data is acquired according to time.

In the above-described information processing device, the server device may be a shared server device.

As a result, for example, glossary data created by another user and stored in the server device can be used.

The user interface control unit in the above-described information processing device may perform processing of providing an environment in which audio data can be used for editing the text information, and the glossary data may be used in editing the text information using the audio data.

As a result, when audio data is converted into text information, conversion based on the glossary data is performed.

In the above-described information processing device, the text information may be information stored in a caption field of IPTC metadata.

As a result, the glossary data can be used for editing the caption field of the IPTC metadata.

In an information processing method of the present technology, an information processing device executes user interface processing of enabling editing of text information as metadata to be added to an image file by using multiple pieces of glossary data that are an aggregate of term data in which character information and abbreviated input information form a set.

A program of the present technology is a program that causes an information processing device to execute user interface processing of enabling editing of text information as metadata to be added to an image file by using multiple pieces of glossary data that are an aggregate of term data in which character information and abbreviated input information form a set.

As a result, editing processing of text information using the multiple pieces of glossary data of the present disclosure can be performed by the information processing device.

### BRIEF DESCRIPTION OF DRAWINGS

Fig. 1 is an explanatory diagram of transfer and upload of an image file and an audio file of an embodiment of the present technology.
Fig. 2 is a block diagram of an imaging device that performs communication in the embodiment.
Fig. 3 is an explanatory diagram of IPTC metadata added to image data in the embodiment.
Fig. 4 is a block diagram of an information processing device of the embodiment.
Fig. 5 is an explanatory diagram of a functional configuration of the information processing device of the embodiment.
Fig. 6 is an explanatory diagram of an image list screen of the embodiment.
Fig. 7 is an explanatory diagram of a menu screen of the embodiment.
Fig. 8 is an explanatory diagram of a glossary list screen of the embodiment.
Fig. 9 is an explanatory diagram of a glossary sub-menu dialog of the embodiment.
Fig. 10 is an explanatory diagram of a glossary data edit screen of the embodiment.
Fig. 11 is an explanatory diagram of a term sub-menu dialog of the embodiment.
Fig. 12 is an explanatory diagram of a term data edit screen of the embodiment.
Fig. 13 is an explanatory diagram of a glossary addition dialog of the embodiment.
Fig. 14 is an explanatory diagram of a caption edit screen of the embodiment.
Fig. 15 is an explanatory diagram of an individual image screen of the embodiment.
Fig. 16 is an explanatory diagram of a state in which a software keyboard is displayed on the caption edit screen of the embodiment.
Fig. 17 is an explanatory diagram of an audio playback state of the caption edit screen of the embodiment.
Fig. 18 is an explanatory diagram of dialog display on the caption edit screen of the embodiment.
Fig. 19 is an explanatory diagram of message display on the caption edit screen of the embodiment.
Fig. 20 is an explanatory diagram of the caption edit screen in a state where voice memo text is added to caption data in the embodiment.
Fig. 21 is an explanatory diagram of a horizontal screen state of the caption edit screen of the embodiment.
Fig. 22 is an explanatory diagram of a state in which a keyboard is displayed on the horizontal screen of the caption edit screen of the embodiment.
Fig. 23 is an explanatory diagram of a voice memo automatic caption assignment setting screen of the embodiment.
Fig. 24 is an explanatory diagram of a setting screen of the embodiment.
Fig. 25 is an explanatory diagram of an automatic upload setting OFF state of an automatic upload setting screen of the embodiment.
Fig. 26 is an explanatory diagram of an automatic upload setting ON state of the automatic upload setting screen of the embodiment.
Fig. 27 is an explanatory diagram of an automatic upload setting ON state of the automatic upload setting screen of the embodiment.
Fig. 28 is an explanatory diagram of an automatic synchronization setting dialog of the embodiment.
Fig. 29 is a flowchart of a processing example at the time of image capturing of the embodiment.
Fig. 30 is a flowchart of the processing example at the time of image capturing of the embodiment.
Fig. 31 is a flowchart of an example of text conversion processing of the embodiment.
Fig. 32 is a flowchart of upload file preparation processing of the embodiment.
Fig. 33 is a flowchart of a processing example from the image list screen of the embodiment.
Fig. 34 is a flowchart of a processing example from the image list screen of the embodiment.
Fig. 35 is a flowchart of a processing example from the image list screen of the embodiment.
Fig. 36 is a flowchart of an example of input handling processing of the embodiment.
Fig. 37 is a flowchart of a processing example at the time of upload of the embodiment.
Fig. 38 is a flowchart of a processing example performed on the glossary list screen of the embodiment.
Fig. 39 is a flowchart of a processing example performed on the glossary data edit screen of the embodiment.
Fig. 40 is a flowchart of an example of glossary synchronization processing of the embodiment.
Fig. 41 is a flowchart of another example of the glossary synchronization processing of the embodiment.
Fig. 42 is a flowchart of an example of rearrangement processing of the embodiment.

### MODE FOR CARRYING OUT THE INVENTION

Hereinafter, an embodiment will be described in the following order.
<1. Image capture and upload according to embodiment>
<2. Configuration of imaging device>
<3. Configuration of information processing device>
<4. User interface screen>
<5. Processing example at time of image capture>
<6. Processing example including text conversion and caption editing>
<7. Processing example at time of upload>
<8. Processing regarding glossary data>
<9. Summary and modification>
<10. Present technology>

### <1. Image capture and upload according to embodiment>

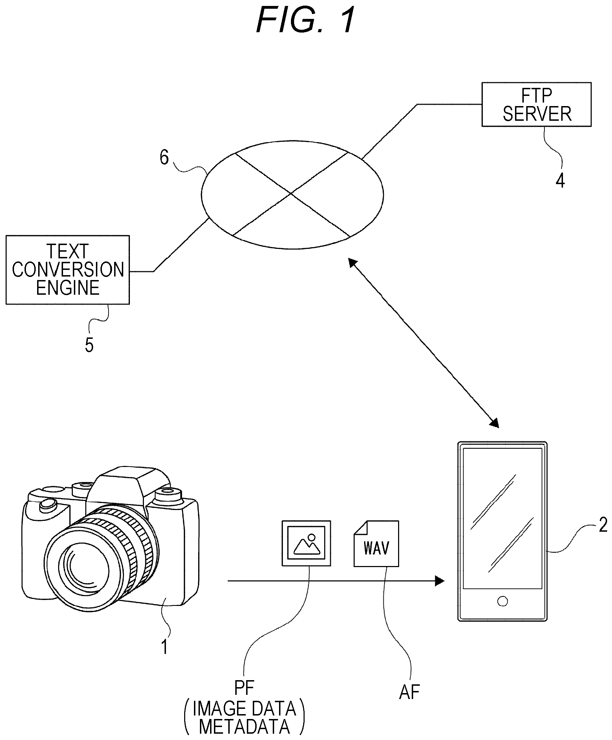

Fig. 1 illustrates an imaging device 1 including an information processing device 2 of the present embodiment, an FTP server 4, a text conversion engine 5, and a network 6.

As the imaging device 1, there are various imaging devices as a video camera or a still camera. The imaging device 1 of Fig. 1 is assumed to be a camera used by a photographer or a reporter in a sports or event venue, a news gathering site, or the like.

Here, the information processing device 2 is exemplified by a portable terminal device such as a smartphone.

Note that as specific examples of the information processing device, various examples such as a personal computer device, a tablet type information processing device, a mobile phone device, game equipment, audio equipment, video equipment, a communication device, a television device, and a server apparatus are assumed, for example. A device capable of performing calculation as information processing, such as a device incorporating a microcomputer, can be implemented as the information processing device of the present disclosure.

Note, however, that in a case where use in an event venue or the like is assumed as described above, a mobile terminal such as a smartphone or a tablet device is preferable.

The imaging device 1 and the information processing device 2 can mutually perform information communication by short-range wireless communication such as Bluetooth (registered trademark), Wi-Fi (registered trademark) communication, or near field communication (NFC), or infrared communication.

Note that the imaging device 1 and the information processing device 2 may be communicable with each other by wired communication.

Furthermore, the information processing device 2 functions as an FTP server, the imaging device 1 functions as an FTP client, and image data and the like are uploaded from the imaging device 1 to the information processing device 2. That is, FTP setting information for performing FTP transfer is stored in the imaging device 1, and FTP transfer using the information processing device 2 as an FTP server is performed by using the FTP setting information.

In the case of the present embodiment, it is assumed that an image file PF and an audio file AF are transmitted from the imaging device 1 to the information processing device 2.

The information processing device 2 can hold the image file PF and the audio file AF transferred from the imaging device 1, present them to the user, assign and edit metadata, and upload the files to the FTP server 4.

The imaging device 1 generates image data as a still image or a moving image by an imaging operation. Note that the metadata can also be assigned by the imaging device 1.

The image file PF illustrated in Fig. 1 is assumed to be a data file including the image data and metadata.

Furthermore, in the case of the present embodiment, the imaging device 1 has a voice memo function. This is a function that enables the user to input voice at the time of imaging, thereby giving an annotation, explanation, or the like to the captured image by voice. For example, when a single still image is captured, a photographer speaks to explain image contents while performing a predetermined operation, or speaks in a state where an image is designated, so that the voice is recorded as a voice memo associated with the image data.

The audio file AF illustrated in Fig. 1 is assumed to be a data file including audio data as the voice memo.

Note that, at the time of capturing a moving image, surrounding audio is also recorded as audio track data. However, the audio track data is audio data included in the image file PF, and is different from the audio file AF. The audio file AF in the description just refers to a file including audio data as a voice memo.

Hereinafter, an example will be described in which still image capturing is assumed, the image file PF includes still image data and metadata, and the audio file AF includes voice memo data generated in association with the still image capturing.

Note that the audio file AF is not necessarily associated with all the image files PF, and the audio file AF is generated and associated with the image file PF by the imaging device 1 only in a case where the photographer or the like performs audio input using the voice memo function.

Therefore, in data transfer from the imaging device 1 to the information processing device 2, there are a case where the image file PF and the audio file AF are transmitted in a pair, and a case where only the image file PF is transmitted.

The information processing device 2 can upload the transferred image file PF and audio file AF to the FTP server 4 through the network 6.

As the network 6, the Internet, a home network, a local area network (LAN), a satellite communication network, and various other networks are assumed, for example.

As the FTP server 4, a server operated by a newspaper company, a broadcasting station, a communication company, or the like is conceivable, for example. The server is not limited to such a server, as a matter of course.

As a form of the FTP server 4, a cloud server, a home server, a personal computer, or the like is assumed.

The information processing device 2 not only uploads the image file PF or the like simply from the imaging device 1 to the FTP server 4 as it is, but can also upload the image file PF or the like after adding or editing caption data included in metadata, setting an image size, compressing data, or the like.

Furthermore, the information processing device 2 can upload the image file PF with which the audio file AF is associated, after performing processing of acquiring text data obtained by converting audio data in the audio file AF, that is, the above-described voice memo into text, and adding the text data to metadata.

In particular, in the case of the present embodiment, the information processing device 2 provides a function of assisting input at the time of editing caption data included in metadata.

Specifically, the information processing device 2 provides a function of presenting glossary data that is an aggregate of term data, a function of editing the glossary data, a function of switching enablement (ON)/disablement (OFF) of each piece of glossary data, a function of managing the status of enablement/disablement of each piece of glossary data, a function of presenting a character string acquired from glossary data as an input candidate, and the like.

Here, term data and glossary data will be described. In term data, "word" and "shortcut" are associated, and multiple shortcuts can be set for one word. For example, a number indicating a uniform number is associated with a player name as a shortcut. In a case where caption data is edited, by inputting a number indicating a uniform number, a player name associated with the uniform number is suggested as an input candidate. As a result, an appropriate character string can be input with a short number of input characters, and efficiency of editing work is improved.

Note that in a case where multiple ways of reading is conceivable for a character as in the Japanese language, "pronunciation" is associated in addition to "word" and "shortcut" to form a piece of term data.

Glossary data is a collection of multiple pieces of term data, and is created for each genre, for example. For example, there are glossary data regarding baseball in which only term data related to baseball is collected, glossary data regarding soccer in which only term data related to soccer is collected, and the like. Furthermore, glossary data for each team, glossary data in which only player names are registered, and the like may be created by further subdivision. Note that glossary data may be created by registering only a single piece of term data.

Enablement information can be set to each piece of glossary data, and ON/OFF is switched by changing the enablement information.

It is conceivable that conversion of a voice memo into text data is performed by equipping the information processing device 2 with a text conversion engine. However, the information processing device 2 itself may omit the text conversion function and use the external text conversion engine 5.

For example, the information processing device 2 transmits audio data of a voice memo to the text conversion engine 5 through the network 6.

The text conversion engine 5 performs processing of converting the audio data into text, and transmits the generated text data to the information processing device 2. As a result, the information processing device 2 can acquire text data obtained by converting the voice memo into text.

Note that for the sake of description, text data obtained by converting a voice memo into text is also referred to as a "voice memo text".

By constructing the communication system as illustrated in Fig. 1, in a case where the user of the imaging device 1 is a professional photographer working for a newspaper company, for example, the following operation can be performed.

That is, the photographer transfers an image he/she captured at the event venue to his/her smartphone (information processing device 2). Then, a system use mode is assumed in which a captured image is uploaded from the information processing device 2 to the FTP server 4 after necessary work such as caption editing is performed in the information processing device 2 such as a smartphone. Furthermore, after the image is transferred to the information processing device 2 such as a smartphone, the image may be automatically uploaded to the FTP server 4 in the information processing device 2.

In such a mode, a voice memo is converted into text, added to metadata, and uploaded together with image data.

### <2. Configuration of imaging device>

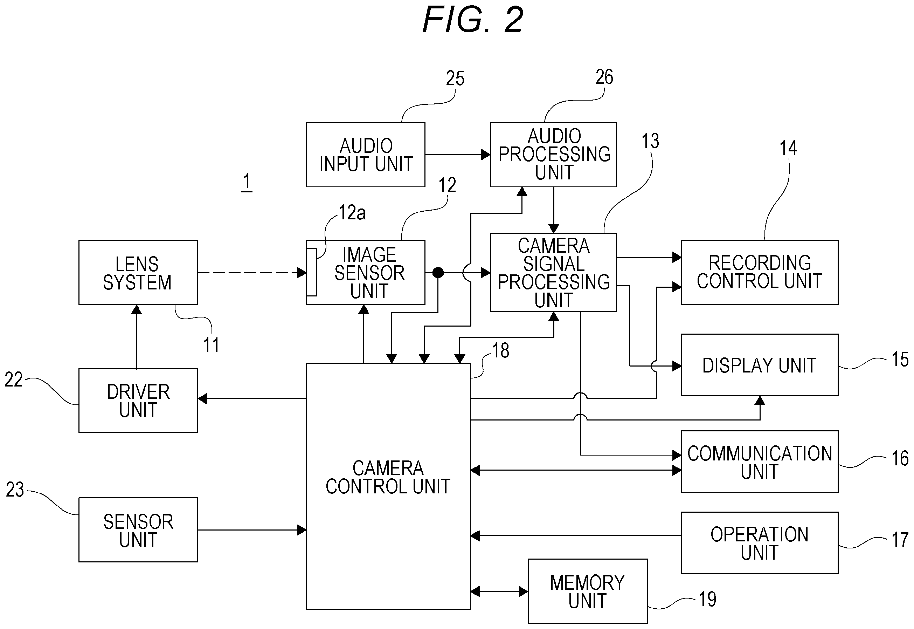

A configuration example of the imaging device 1 will be described with reference to Fig. 2.

The imaging device 1 includes, for example, a lens system 11, an imaging element unit 12, a camera signal processing unit 13, a recording control unit 14, a display unit 15, a communication unit 16, an operation unit 17, a camera control unit 18, a memory unit 19, a driver unit 22, a sensor unit 23, an audio input unit 25, and an audio processing unit 26.

The lens system 11 includes lenses such as a zoom lens and a focus lens, a diaphragm mechanism, and the like. Light from the subject (incident light) is guided by the lens system 11 and is focused on the imaging element unit 12.

For example, the imaging element unit 12 includes image sensor 12a (imaging element) such as a complementary metal oxide semiconductor (CMOS) or charge coupled device (CCD).

For example, the imaging element unit 12 performs, on an electric signal obtained by performing photoelectric conversion on light received by the image sensor 12a, correlated double sampling (CDS) processing, automatic gain control (AGC) processing, and the like, and also analog/digital (A/D) conversion processing. Then, the imaging element unit 12 outputs an imaging signal as digital data to the subsequent camera signal processing unit 13 and camera control unit 18.

The camera signal processing unit 13 is an image processor including a digital signal processor (DSP) or the like, for example. The camera signal processing unit 13 performs various signal processing on a digital signal (captured image signal) from the imaging element unit 12. For example, as a camera process, the camera signal processing unit 13 performs preprocessing, synchronization processing, YC generation processing, resolution conversion processing, file formation processing, and the like.

In preprocessing, the captured image signal from the imaging element unit 12 is subjected to clamp processing for clamping the black levels of R, G, and B to a predetermined level, and correction processing among the color channels of R, G, and B, for example.

In synchronization processing, color separation processing is performed so that the image data for each pixel has all the color components of R, G, and B. For example, in the case of an imaging element using a Bayer array color filter, demosaic processing is performed as color separation processing.

In YC generation processing, a luminance (Y) signal and a color (C) signal are generated (separated) from the image data of R, G, and B.

In resolution conversion processing, resolution conversion processing is performed on the image data subjected to various signal processing.

In the file formation processing, for example, the image data subjected to the above-described various processing is subjected to, for example, compression encoding for recording or communication, formatting, generation or addition of metadata, and the like to generate a file for recording or communication.

For example, as a still image file, an image file PF in a format such as joint photographic experts group (JPEG), tagged image file format (TIFF), and graphics interchange format (GIF) is generated. Furthermore, it is also conceivable to generate the image file PF in an MP4 format or the like used for recording moving images and audio conforming to MPEG-4.

Note that it is also conceivable to generate the image file PF as RAW image data.

The camera signal processing unit 13 generates metadata including information of processing parameters in the camera signal processing unit 13, various control parameters acquired from the camera control unit 18, information indicating an operation state of the lens system 11 or the imaging element unit 12, mode setting information, and imaging environment information (date and time, place, and the like).

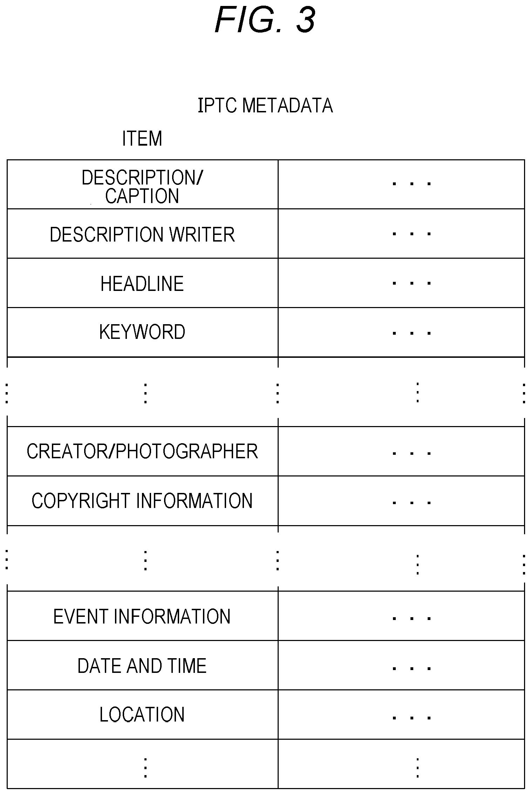

In particular, in the case of the present embodiment, international press telecommunications council (IPTC) metadata illustrated in Fig. 3 is included.

IPTC metadata is metadata in a format formulated by a media company association, and while Fig. 3 illustrates only some items thereof, various types of information such as "description/caption", "description writer", "headline", and "keyword" can be described.

The recording control unit 14 performs recording and playback on a recording medium including a nonvolatile memory, for example. The recording control unit 14 performs processing of recording image files such as moving image data and still image data, thumbnail images, and the like on a recording medium, for example.

The recording control unit 14 can be implemented in various ways. For example, the recording control unit 14 may be configured as a flash memory and a write/read circuit thereof built in the imaging device 1. Furthermore, the recording control unit 14 may be in the form of a card recording/playback unit that performs recording/playback access to a recording medium detachable from the imaging device 1, such as a memory card (portable flash memory or the like). Furthermore, the recording control unit 14 may be implemented as a hard disk drive (HDD) or the like as a form built in the imaging device 1.

The display unit 15 is a display unit that performs various displays for the imaging person, and is, for example, a display panel or a viewfinder including a display device such as a liquid crystal display (LCD) or an organic electro-luminescence (EL) display arranged in a housing of the imaging device 1.

The display unit 15 causes various displays to be presented on a display screen on the basis of instructions of the camera control unit 18.

For example, the display unit 15 displays a playback image of image data read from a recording medium by the recording control unit 14.

Furthermore, there is a case where image data of a captured image whose resolution has been converted for display by the camera signal processing unit 13 is supplied to the display unit 15, and the display unit 15 performs display on the basis of the image data of the captured image in response to an instruction from the camera control unit 18. As a result, a so-called through image (subject monitoring image), which is a captured image during composition confirmation or moving image recording, for example, is displayed.

Furthermore, the display unit 15 causes various operation menus, icons, messages, and the like, that is, displays as a graphical user interface (GUI) to be presented on the screen on the basis of instructions of the camera control unit 18.

The communication unit 16 performs data communication and network communication with an external device by wire or wirelessly.

For example, the communication unit 16 transmits and outputs captured image data (still image file or moving image file) to an external display device, recording device, playback device, or the like.

Furthermore, the communication unit 16 can serve as a network communication unit to communicate with various networks 6 such as the Internet, a home network, and a local area network (LAN), and transmit and receive various data to and from a server, a terminal, and the like on the network. For example, although omitted in Fig. 1, the communication unit 16 may perform communication processing of uploading captured image data (above-described image file and the like) to the FTP server 4.

Furthermore, in the case of the present embodiment, the communication unit 16 communicates with the information processing device 2 and transfers the image file PF and the audio file AF.

The operation unit 17 collectively represents input devices for the user to perform various operation inputs. Specifically, the operation unit 17 represents various operation elements (keys, dials, touch panel, touch pad, and the like) provided in the housing of the imaging device 1.

The operation unit 17 detects the user's operation, and transmits a signal corresponding to the input operation to the camera control unit 18.

The camera control unit 18 includes a microcomputer (arithmetic processing unit) provided with a central processing unit (CPU).

The memory unit 19 stores information or the like used for processing by the camera control unit 18. For example, the illustrated memory unit 19 comprehensively represents a read only memory (ROM), a random access memory (RAM), a flash memory, and the like.

The memory unit 19 may be a memory area built in a microcomputer chip as the camera control unit 18, or may include a separate memory chip.

The camera control unit 18 controls the entire imaging device 1 by executing a program stored in the ROM, the flash memory, or the like of the memory unit 19.

For example, the camera control unit 18 controls operations of necessary units for controlling the shutter speed of the imaging element unit 12, instructing various signal processing by the camera signal processing unit 13, imaging and recording operations according to the user's operation, a playback operation of recorded image files, transfer and upload operations of recorded images, operations of the lens system 11 such as zoom, focus, aperture adjustment in the lens barrel, operations of the user interface, and the like.

The RAM in the memory unit 19 is used for temporarily storing data, programs, and the like as a work area for various data processing of the CPU of the camera control unit 18.

The ROM and flash memory (nonvolatile memory) in the memory unit 19 are used for storing an operating system (OS) for the CPU to control units, content files such as image files, application programs for various operations, firmware, various types of setting information, and the like.

The various types of setting information include the above-described FTP setting information, exposure settings, shutter speed settings, and mode settings as setting information regarding the imaging operation, white balance settings, color settings, and settings regarding image effect as setting information regarding image processing, and custom key settings, display settings as setting information regarding operability, and the like.

For example, the driver unit 22 is provided with a motor driver for a zoom lens drive motor, a motor driver for a focus lens drive motor, a motor driver for a diaphragm mechanism motor, and the like.

These motor drivers apply a drive current to the corresponding driver in response to an instruction from the camera control unit 18 to move the focus lens or zoom lens, open and close the diaphragm blades of the diaphragm mechanism, or the like.

The sensor unit 23 comprehensively represents various sensors mounted on the imaging device.

For example, an inertial measurement unit (IMU) is mounted as the sensor unit 23. For example, an angular velocity (gyro) sensor of three axes of pitch, yaw, and roll can detect an angular velocity, and an acceleration sensor can detect acceleration.

Furthermore, a position information sensor, an illuminance sensor, a proximity sensor, or the like may be mounted as the sensor unit 23, for example.

The audio input unit 25 includes, for example, a microphone, a microphone amplifier, and the like, and outputs an audio signal obtained by collecting surrounding audio.

The audio processing unit 26 performs processing of converting the audio signal obtained by the audio input unit 25 into a digital audio signal, AGC processing, sound quality processing, noise reduction processing, and the like. The audio data subjected to the above processing is output to the camera signal processing unit 13 and the camera control unit 18.

For example, audio data is processed as audio data accompanying a moving image in the camera control unit 18 at the time of capturing the moving image.

Furthermore, audio data can be converted into a file as an audio file AF in the camera signal processing unit 13 or the camera control unit 18 as audio data as a so-called voice memo at the time of imaging or the like.

The audio file AF can be recorded on a recording medium in association with the image file in the recording control unit 14, or can be transmitted and output together with the image file from the communication unit 16.

### <3. Configuration of information processing device>

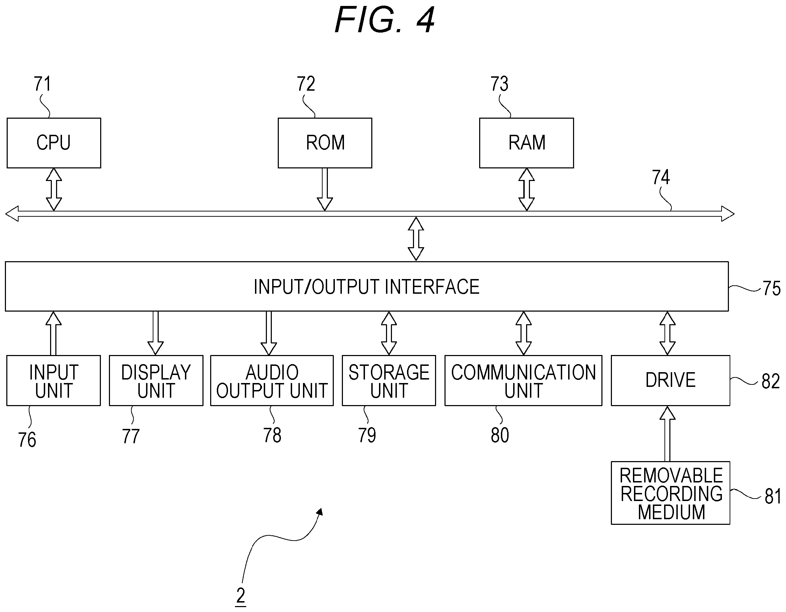

Fig. 4 illustrates a configuration example of the information processing device 2 such as a mobile terminal device.

A CPU 71 of the information processing device 2 performs various processing in accordance with a program stored in a ROM 72 or a program loaded from a storage unit 79 into a RAM 73. The RAM 73 also appropriately stores data and the like necessary for the CPU 71 to perform various processing.

The CPU 71, the ROM 72, and the RAM 73 are mutually connected by a bus 74. An input/output interface 75 is also connected to the bus 74.

An input unit 76 including an operation element and an operation device is connected to the input/output interface 75.

For example, as the input unit 76, various operation elements and operation devices such as a keyboard, a mouse, keys, dials, a touch panel, a touch pad, and a remote controller are assumed.

The input unit 76 detects the user's operation, and the CPU 71 interprets a signal corresponding to the input operation.

Furthermore, a display unit 77 including an LCD, an organic EL panel, or the like, and an audio output unit 78 including a speaker or the like are connected to the input/output interface 75 integrally or as separate units.

The display unit 77 is a display unit that presents various displays, and includes, for example, a display device provided in a housing of the information processing device 2, a separate display device connected to the information processing device 2, or the like.

The display unit 77 displays images for various image processing, moving images to be processed, and the like on a display screen on the basis of instructions from the CPU 71. Furthermore, the display unit 77 displays various operation menus, icons, messages, and the like, that is, displays as a graphical user interface (GUI) on the basis of instructions of the CPU 71.

In some cases, a storage unit 79 including a hard disk, a solid-state memory, or the like, and a communication unit 80 including a modem or the like are connected to the input/output interface 75.

The communication unit 80 performs communication processing through a transmission path such as the Internet, wired/wireless communication with various devices, bus communication, and the like.

In the case of the present embodiment, the communication unit 80 has a function of performing communication with the imaging device 1 by, for example, the above-described FTP communication, short-range wireless communication such as Bluetooth, Wi-Fi, or NFC, infrared communication, wired communication, or the like.

A drive 82 is also connected to the input/output interface 75 as necessary, and a removable recording medium 81 such as a magnetic disk, an optical disk, a magneto-optical disk, or a semiconductor memory is appropriately mounted.

With the drive 82, a data file such as an image file, various computer programs, and the like can be read from the removable recording medium 81. The read data file is stored in the storage unit 79, and images and sounds included in the data file are output by the display unit 77 and the audio output unit 78. Furthermore, the computer program and the like read from the removable recording medium 81 are installed in the storage unit 79 as necessary.

The information processing device 2 may be equipped with a processor as a text conversion engine 83.

The text conversion engine 83 performs, for example, processing of analyzing audio data and converting the audio data into text data.

Note that in a case where an external text conversion engine 5 is used as described above, the information processing device 2 does not have to include the processor as the text conversion engine 83.

In the information processing device 2, for example, software for processing of the present disclosure can be installed through network communication by the communication unit 80 or through the removable recording medium 81. Alternatively, the software may be stored in advance in the ROM 72, the storage unit 79, or the like.

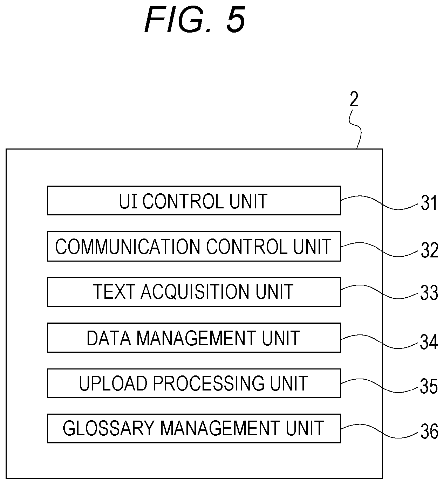

For example, a functional configuration as illustrated in Fig. 5 is constructed in the CPU 71 of the information processing device 2 according to such software (application program).
Fig. 5 illustrates, as functions provided in the information processing device 2, a user interface (UI) control unit 31, a communication control unit 32, a text acquisition unit 33, a data management unit 34, an upload processing unit 35, and a glossary management unit 36.

The UI control unit 31 performs user interface processing of presenting the image file PF and the audio file AF transferred from the imaging device 1 to the user, and accepting a user operation for setting, editing, and the like of various types of information.

Examples of the user interface processing include processing of providing an operation input environment to the user by performing output such as display output and audio output to the user, processing of performing display output and audio output for presenting various types of information to the user, processing of detecting an operation by the user, processing of detecting/estimating an intention of the user, and the like.

The UI control unit 31 performs processing of providing an operation input environment to the user by performing output such as display output and audio output to the user, for example.

Alternatively, the UI control unit 31 performs processing of detecting an operation by the user, for example.

Alternatively, the UI control unit 31 performs, for example, both the processing of providing an operation input environment to the user and the processing of detecting an operation by the user.

The UI control unit 31 may perform other types of user interface processing, as a matter of course.

The UI control unit 31 provides a UI environment that enables ON/OFF of processing of automatically adding a voice memo text obtained by converting a voice memo of the audio file AF into a text as a part of caption data in metadata added to image data.

Furthermore, the UI control unit 31 provides a UI environment that enables setting of whether or not to automatically perform processing of uploading the image file PF including image data and metadata to the FTP server 4 after performing the processing of using the voice memo text as the metadata corresponding to the image data. Furthermore, in this case, it is also possible to set whether or not to upload the audio file AF.

Furthermore, the UI control unit 31 also provides a UI environment that enables display and audio playback of voice memo text.

Note that the UI control unit 31 of the present embodiment performs user interface processing for enabling editing of text information as metadata using multiple pieces of glossary data. Specifically, in editing caption data assigned to image data obtained by capturing games of A team and B team of baseball, soccer glossary data, A team glossary data, and B team glossary data are turned on to present candidates of input characters to the user.

A candidate of an input character is, for example, a word or the like that is frequently used usually by an autocorrect function included in the information processing device 2 when a word or a sentence estimated from an already input character is suggested, and a word that starts from an already input character and is in the glossary data set to the ON state. In the following description, an already input character is referred to as an "input character", and a character to be input estimated from the input character is referred to as an "input candidate".

The UI control unit 31 performs user interface processing for editing term data and glossary data.

Furthermore, the UI control unit 31 performs user interface processing for switching ON/OFF for each piece of glossary data.

Moreover, the UI control unit 31 performs user interface processing for acquiring glossary data from another information processing device or the like, and user interface processing for transferring glossary data to another information processing device.

Furthermore, the UI control unit 31 performs user interface processing for changing the synchronization setting of glossary data.

The communication control unit 32 is a function of controlling a communication operation by the communication unit 80.

The communication control unit 32 performs processing of causing the communication unit 80 to perform communication with the imaging device 1.

When the audio file AF is transferred from the imaging device 1, the text acquisition unit 33 performs processing of acquiring a voice memo text obtained by converting a voice memo included in the audio file AF into text.

Specifically, the text acquisition unit 33 causes the text conversion engine 83 to perform text conversion processing to acquire the voice memo text.

Alternatively, the text acquisition unit 33 performs processing of transmitting audio data as a voice memo from the communication unit 80 to the text conversion engine 5 and acquiring a voice memo text returned from the text conversion engine 5.

The data management unit 34 is a function of performing, after receiving the image file PF including the image data transmitted from the imaging device 1 and the audio file AF including the related voice memo, processing of setting the voice memo text acquired by the text acquisition unit 33 for the voice memo included in the audio file AF as metadata corresponding to the image data.

Furthermore, the data management unit 34 performs processing such as storage and editing of the image file PF and the audio file AF transmitted from the imaging device 1. For example, image data editing, metadata addition (tag addition), processing related to various operation settings, and the like are performed.

The upload processing unit 35 is a function of performing upload processing to the FTP server 4 through the communication unit 80.

In particular, the upload processing unit 35 performs processing of uploading the image file PF (image data and metadata) to the FTP server 4 after the data management unit 34 performs processing of setting the voice memo text for the audio file AF as metadata corresponding to the image data. In some cases, the upload processing unit 35 uploads the audio file AF to the FTP server 4 together with the image file PF.

The glossary management unit 36 performs processing of storing term data and glossary data, ON/OFF control of glossary data, storage processing of an ON/OFF state of glossary data, processing of searching for an input candidate corresponding to an input character from glossary data that is in the ON state, processing of acquiring glossary data received from another information processing device by the communication control unit 32, processing of storing glossary data, processing of transferring glossary data through the communication control unit 32, and the like.

Each of the above functions is provided, for example, when the information processing device 2 installs application software for implementing the processing of the present disclosure.

Among the above functions, the UI control unit 31 and the glossary management unit 36 are provided to the information processing device 2 to perform processing for using glossary data in editing metadata.

### <4. User interface screen>

Hereinafter, the UI screen on the display unit 77 of the information processing device 2 will be described. Each of the following screens is an example of a screen displayed on the display unit 77 according to the function of the UI control unit 31 by the CPU 71. In the description, for example, a smartphone is assumed as the information processing device 2, and display contents on a display formed on a housing of the smartphone are assumed.

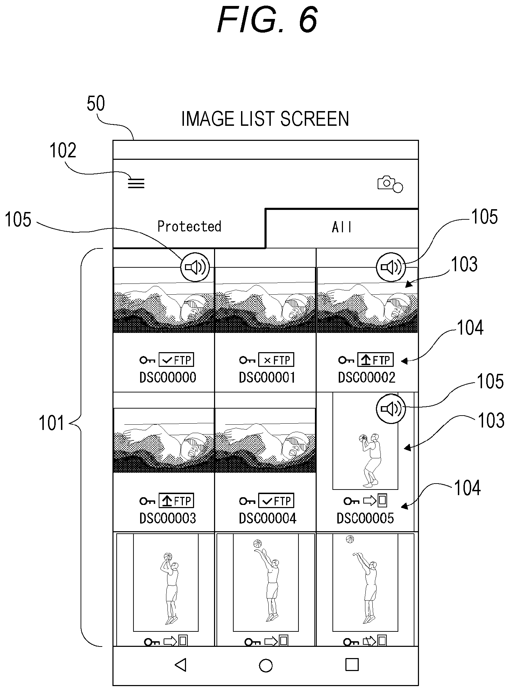

Fig. 6 illustrates an image list screen 50.

The image list screen 50 is a screen on which image data of the image files PF transferred from the imaging device 1 is displayed as a list by thumbnail images.

An image list area 101 is provided on the image list screen 50, and a list of thumbnail images 103 of image data captured from the imaging device 1 is displayed in the image list area 101. Note that the target images to be displayed in the list can be selected to be all captured images or only protected images. In a case where there are many images and all of the images cannot be displayed on one screen, each image (thumbnail image 103) is displayed by scrolling, page feeding, or the like.

Image information 104 is displayed corresponding to each thumbnail image 103. In the image information 104, for example, an image data name such as "DSC00000", an icon indicating a protected state, an icon related to FTP upload, and the like are displayed.

Furthermore, some image data (image files PF) displayed in the list are associated with an audio file AF as a voice memo. Image data having a corresponding voice memo is provided with a voice memo mark 105 displayed on the thumbnail image 103.

A menu button 102 is displayed on the image list screen 50. When the user performs an operation such as tapping the menu button 102, the display transitions to a menu screen 55 to be described later.

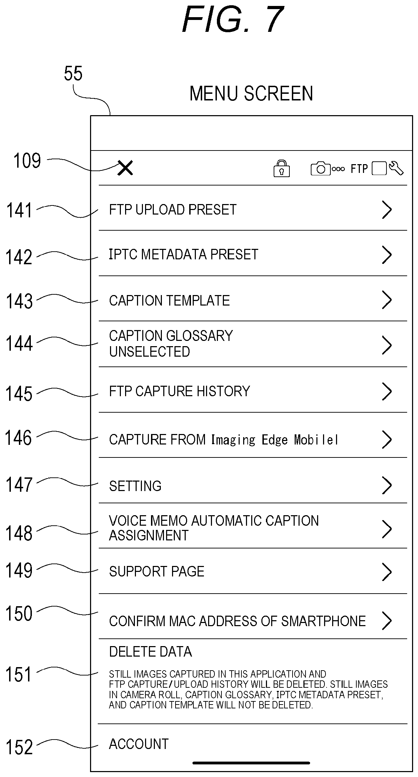

Fig. 7 is an example of the menu screen 55. The menu screen 55 is provided with a close button 109 for closing the menu screen 55.

The menu screen 55 is provided with, as menu items, an FTP upload preset item 141, an IPTC metadata preset item 142, a caption template item 143, a caption glossary item 144, an FTP capture history item 145, a capture item 146, a setting item 147, a voice memo automatic caption assignment item 148, a support page item 149, a MAC address confirmation item 150, a data deletion item 151, and an account item 152. These are merely examples, as a matter of course, and various examples of the menu item contents are conceivable. Furthermore, there may be more items, or the items may be hierarchized. In a case where there are many items, the items are displayed by scrolling or page feeding.

Here, first, an operation on the caption glossary item 144 will be described as an item related to the processing of the present embodiment.

The caption glossary item 144 is an item for performing various operations on glossary data. When the user operates the caption glossary item 144, a glossary list screen 58 is displayed.

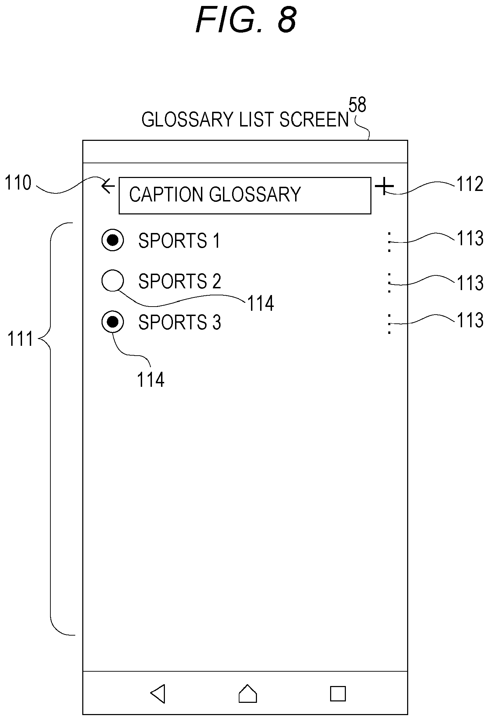

Fig. 8 is an example of the glossary list screen 58.

The glossary list screen 58 is provided with a return button 110, and when the return button 110 is operated, the display returns to the menu screen 55 of Fig. 7.

On the glossary list screen 58, a glossary list display section 111 that displays a list of glossary data and a glossary addition button 112 for newly adding glossary data are displayed.

Furthermore, a sub-menu button 113 for performing an operation on each piece of glossary data and a selection button 114 indicating the ON/OFF state and for switching the ON/OFF state are displayed for each piece of glossary data.

The ON/OFF state of each piece of glossary data is stored when the return button 110 is operated to return to the menu screen 55.

In the state illustrated in Fig. 8, the glossary data with the title "Sports 1" is in the ON state, the glossary data with the title "Sports 2" is in the OFF state, and the glossary data with the title "Sports 3" is in the ON state.

The user can switch a suggestion word presented at the time of text editing by operating a selection button of each piece of glossary data.

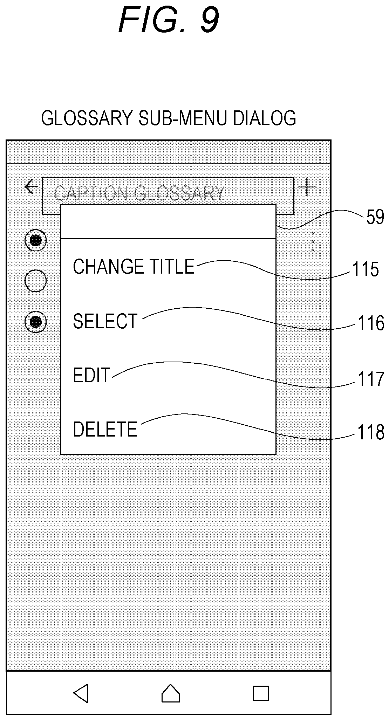

When the sub-menu button 113 provided for each piece of glossary data is operated, a glossary sub-menu dialog 59 illustrated in Fig. 9 is superimposed and displayed on the glossary list screen 58.

In the glossary sub-menu dialog 59, a title change button 115 for changing the title (such as "Sports 1" mentioned above) assigned to the glossary data, a selection button 116 for changing from the OFF state to the ON state (selected state), an edit button 117 for editing each term data recorded in the glossary data, and a delete button 118 for deleting the glossary data are displayed.

Furthermore, for example, when the outside of the area of the glossary sub-menu dialog 59 is operated, the display of the glossary sub-menu dialog 59 ends, and the display returns to the glossary list screen 58.

The selection button 116 is displayed when the sub-menu button 113 of a glossary data in the OFF state is operated, and a non-selection button 116A for changing to an unselected state is displayed instead of the selection button 116 when the sub-menu button 113 of a glossary data in the ON state is operated.

The edit button 117 is operated not only to change term data registered in glossary data, but also to add new term data to glossary data or to delete registered term data, for example.

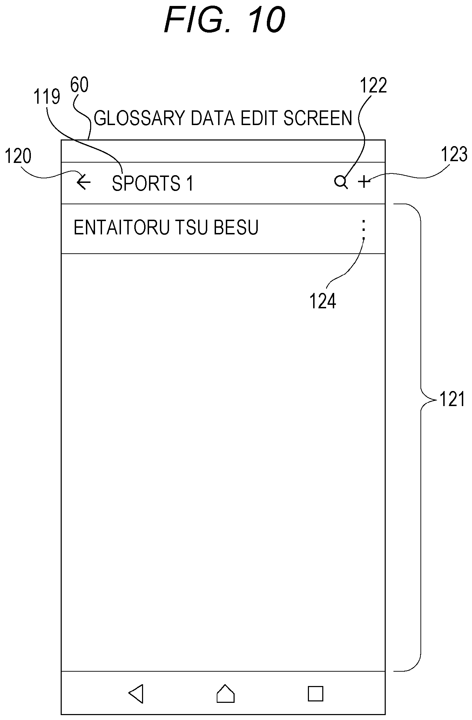

When the edit button 117 is operated, a glossary data edit screen 60 illustrated in Fig. 10 is displayed.

The glossary data edit screen 60 displays a title display section 119 that displays a title assigned to the glossary data, a return button 120 for returning to the glossary list screen 58, a term list display section 121 that displays a list of term data registered in the glossary data, a search button 122 for searching for term data, and a term addition button 123 for adding term data.

A piece of term data is displayed on the term list display section 121. That is, Fig. 10 illustrates an example in which only one term "entaitoru tsu besu" is registered in the glossary data with the title "Sports 1".

Furthermore, each piece of term data is provided with a sub-menu button 124 for performing an operation for each piece of term data.

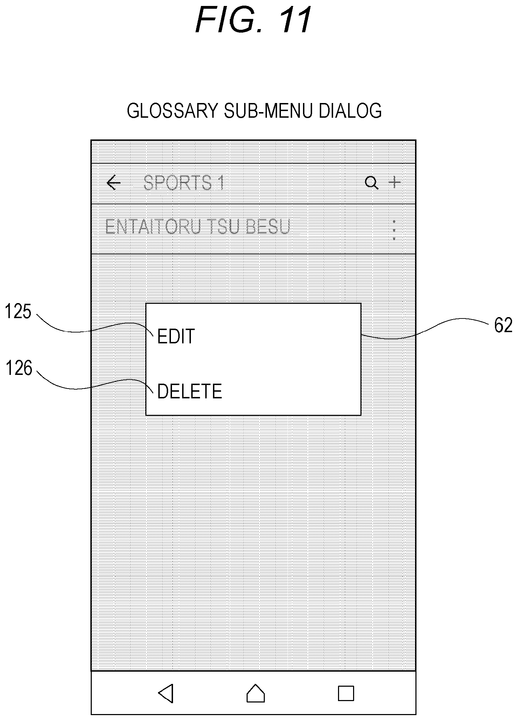

When the sub-menu button 124 is operated, a term sub-menu dialog 62 illustrated in Fig. 11 is displayed.

The term sub-menu dialog 62 is provided with an edit button 125 for editing term data and a delete button 126 for deleting term data. Furthermore, when the outside of the area of the term sub-menu dialog 62 is operated, the display of the term sub-menu dialog 62 ends, and the glossary data edit screen 60 is displayed again.

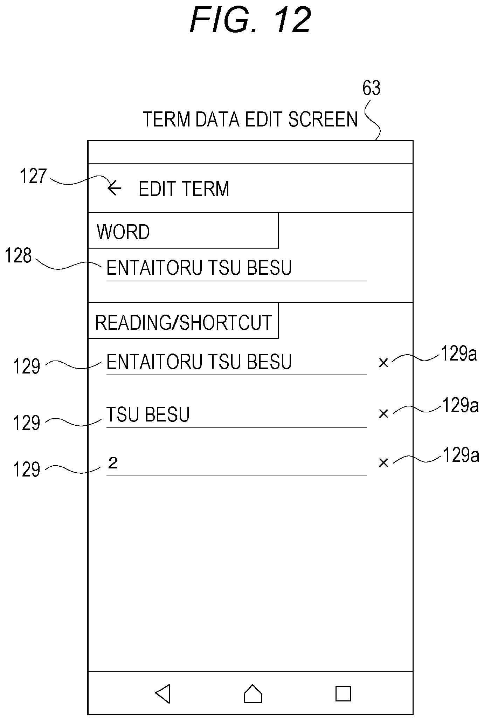

When the edit button 125 of the term sub-menu dialog 62 is operated, a term data edit screen 63 illustrated in Fig. 12 is displayed.

The term data edit screen 63 is provided with a return button 127 for returning to the glossary data edit screen 60, a word input field 128 for editing a word of the term data, and a reading input field 129 for editing the reading and the shortcut.

Note that in the above description, the reading of a word indicates how to read the word, and the shortcut of a word is a character string input to present the word as a suggestion word. That is, although "reading" and "shortcut" have been described as different concepts, both of them are character strings input for presenting a word as a suggestion word. Hence, "reading" and "shortcut" are not distinguished from each other and are both referred to as "reading" below.

For example, at the time point when the part "entaitoru" of the "reading" "entaitoru tsu besu" is input, "entaitoru tsu besu" is presented as a suggestion word. Furthermore, similarly, at the time point when the "shortcut" "2" is input, the associated "entaitoru tsu besu" is presented as a suggestion word.

That is, the user can cause the corresponding word to be presented as a suggestion word both by inputting a part of the "reading" and by inputting a part of the "shortcut". Hence, the efficiency of editing work is improved.

In each reading input field 129, a delete button 129a for deleting a character string set as the "reading" (including "shortcut") is arranged.

The description returns to the glossary list screen 58 in Fig. 8.

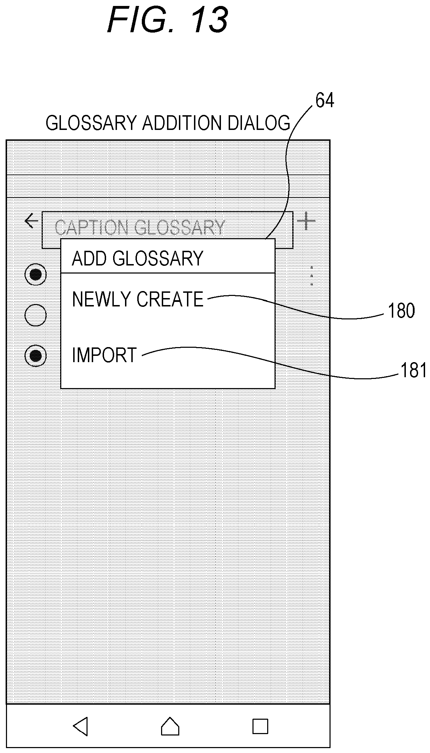

When the glossary addition button 112 on the glossary list screen 58 is operated, a glossary addition dialog 64 illustrated in Fig. 13 is displayed.

In the glossary addition dialog 64, a newly create button 180 and an import button 181 are displayed.

The newly create button 180 is an operation element for operating the information processing device 2 to newly create glossary data.

The import button 181 is an operation element for adding new glossary data to the glossary data managed by the information processing device 2 by acquiring already created glossary data from another information processing device.

The description returns to the image list screen 50 illustrated in Fig. 6.

The user can perform an image selection operation on the image list screen 50. For example, the user can select specific image data by an operation such as tapping the thumbnail image 103.

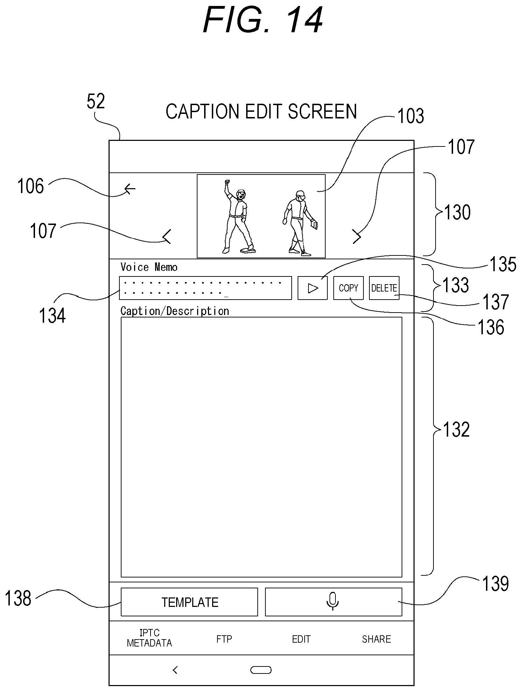

For example, a caption edit screen 52 as illustrated in Fig. 14 is displayed by a selection operation of specific image data.

The caption edit screen 52 is provided with an image field 130, a caption field 132, and a voice memo field 133.

The thumbnail image 103 and a feed button 107 are displayed in the image field 130. The displayed thumbnail image 103 is a thumbnail image of image data selected by the user. This makes it clear that the currently displayed caption edit screen 52 is a screen for editing the caption for the image data represented by the thumbnail image 103.

The user can operate the feed button 107 to switch to a state in which the preceding or subsequent image data in the image list screen 50 is selected. For example, the thumbnail image 103 is switched on the caption edit screen 52 by operating the feed button 107. Then, the caption edit screen 52 becomes a screen for editing the caption for the image data represented by the new thumbnail image 103.

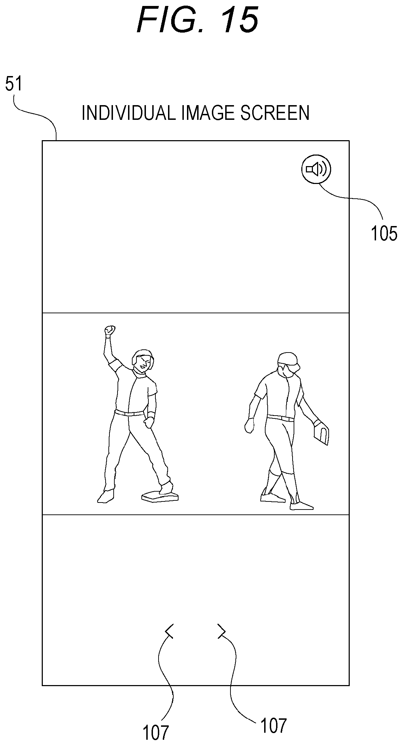

Furthermore, the user can display the image indicated by the thumbnail image 103 larger on an individual image screen 51 in Fig. 15 by, for example, a pinch operation, a tap operation or the like.

On the individual image screen 51, the feed button 107 is displayed, and the user can operate the feed button 107 to switch the display to the preceding or subsequent image in the state of the individual image screen 51.

Furthermore, in the case of image data including a voice memo, the voice memo mark 105 is displayed on the individual image screen 51 as well.

In the caption field 132 of the caption edit screen 52 in Fig. 14, caption data described in the "description/caption" field in the above-described IPTC metadata is displayed, and the caption data can be edited.

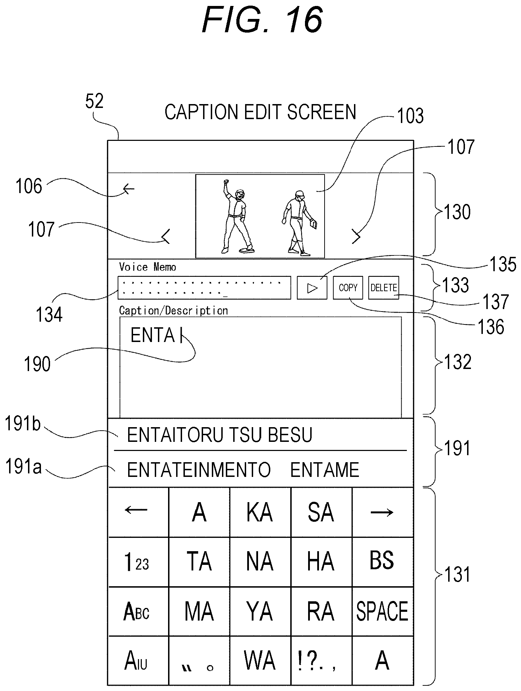

For example, when the user taps the caption field 132, a software keyboard 131 is displayed as illustrated in Fig. 16, and arbitrary characters can be input by operating the software keyboard. Caption data input using the caption field 132 is described in the description/caption field of the IPTC metadata for the image data.

When the caption edit screen 52 is opened for image data to which caption data has already been input, that is, image data in which caption data has already been described as IPTC metadata, the already input caption data is displayed in the caption field 132. Since caption data can be added in the imaging device 1, for example, caption data input in the imaging device 1 may be displayed in the caption field 132, or caption data input in the caption field 132 and described in the IPTC metadata in the past may be displayed.

Accordingly, by using the caption field 132, the user can newly input caption data or edit (e.g., add, delete, or correct) caption data input in the past.

Fig. 16 illustrates a state in which characters "enta" are input using the software keyboard 131. A caret 190 indicating the character input position is displayed behind the input character "enta".

Furthermore, between the caption field 132 and the software keyboard 131, a suggestion field 191 for presenting a character string or word (i.e., input candidate) expected to be input from the input characters is provided.

The suggestion field 191 includes a normal candidate display field 191a in which normal input candidates are displayed and a specific candidate display field 191b in which input candidates selected from the above-described glossary data is displayed.

The normal candidate display field 191a displays, for example, a character string or a sentence selected in consideration of a use frequency or the like from character strings input on all application programs that can be executed by the information processing device 2 including the present application program.

As a result, for example, "entateinmento", "entame" which is an abbreviation for "entateinmento", or the like is suggested in the normal candidate display field 191a.

The specific candidate display field 191b displays character information of term data acquired from glossary data selected by the user among glossary data in which term data that frequently appears in a specific photographing situation or term data that is troublesome to input are registered. For example, character information of a word starting from "enta" which are input characters or term data partially including the input characters among the term data registered in the glossary data is displayed.

As a result, for example, "entaitoru tsu besu" and the like, which are words used only in a specific scene such as baseball, is suggested in the specific candidate display field 191b.

When the user performs an operation of selecting a character string displayed in the normal candidate display field 191a or the specific candidate display field 191b, the selected character string is inserted into the display position of the caret 190.

As a result, editing of caption data is accelerated.

Note that a shortcut is associated with term data. For example, as illustrated in Fig. 12, a shortcut "2" is associated with character information "entaitoru tsu besu".

That is, the user can cause the character string "entaitoru tsu besu" to be displayed in the specific candidate display field 191b by inputting "2" as the character string that is not included in the word "entaitoru tsu besu" at all.

Accordingly, the user can easily and quickly edit the caption data by successfully using the shortcut of term data.

The description returns to Fig. 14. The caption edit screen 52 is provided with a template button 138 and a voice input button 139.

The user can call a template of the caption and display the template in the caption field 132 by operating the template button 138.

Furthermore, the user can input caption data by voice by operating the voice input button 139. In this case, the input voice may be converted into text similarly to the conversion of the voice memo into text.

A voice memo text area 134 is provided in the voice memo field 133 of the caption edit screen 52, and a voice memo text is displayed. That is, the voice memo transferred as audio data from the imaging device 1 is converted into text and displayed in the voice memo field 133. As a result, the user can confirm the contents of the voice memo on the caption edit screen 52.

Furthermore, a playback button 135, a copy button 136, and a delete button 137 are displayed in the voice memo field 133, and an operation related to voice memo can be performed.

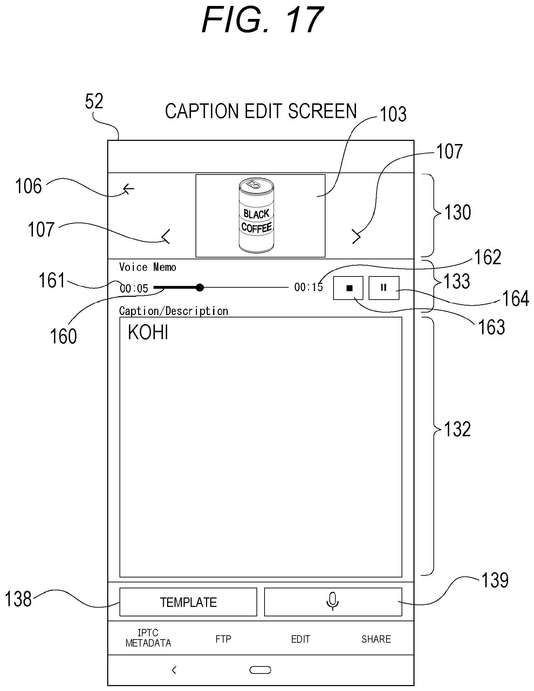

When the user operates the playback button 135, audio playback of the voice memo is started. Fig. 17 illustrates display of a state where audio playback is being performed.

For example, during audio playback, a seek bar 160, a current time 161, a total playback length 162, a stop button 163, and a pause button 164 are displayed instead of the voice memo text area 134, the playback button 135, the copy button 136, and the delete button 137. The seek bar 160 and the current time 161 indicate the progress of audio playback.

Furthermore, the stop button 163 and the pause button 164 enable the user to stop or pause audio playback.

When the user operates the delete button 137 in the voice memo field 133 on the caption edit screen 52 in Fig. 14, the voice memo is deleted.

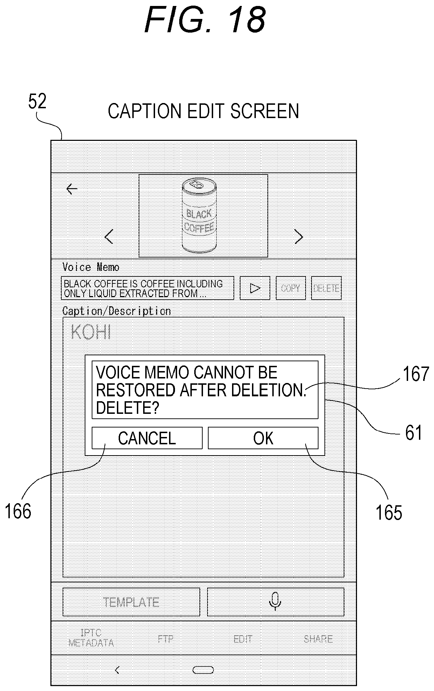

In this case, a confirmation dialog 61 as illustrated in Fig. 18, for example, is displayed in response to the operation of the delete button 137, and the user is requested to confirm deletion. In the confirmation dialog 61, a warning message 167 regarding the deletion is displayed, and an OK button 165 and a cancel button 166 are displayed. When the user operates the OK button 165, deletion processing is performed. In a case where the user operates the cancel button 166, the deletion processing is canceled.

Note that the following examples are conceivable as deletion of a voice memo.

In a case where there is a voice memo corresponding to image data, there is a case where voice memo text is obtained, and a case where the voice memo is not converted into text.

In a case where there is a voice memo that is audio data and there is no voice memo text, it is conceivable that the voice memo (audio file AF) is deleted by a deletion operation.

In a case where there are a voice memo that is audio data and a voice memo text, it is conceivable to delete both the voice memo and the voice memo text, delete only the voice memo, or delete only the voice memo text, depending on the deletion operation. A delete button may be individually provided for the voice memo and the voice memo text, as a matter of course.

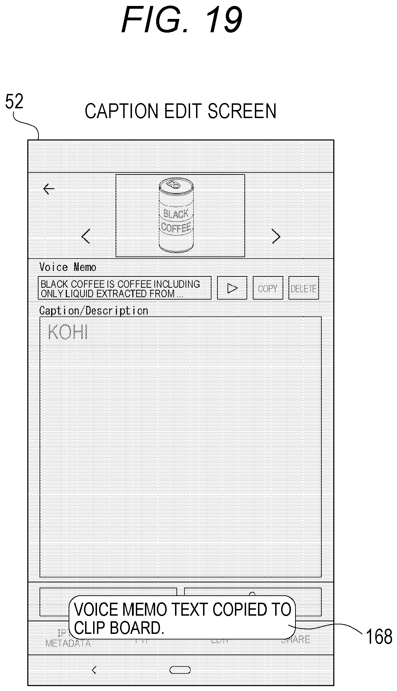

When the user operates the copy button 136 in the voice memo field 133 on the caption edit screen 52 in Fig. 14, the voice memo text displayed in the voice memo text area 134 is copied to a clipboard area on the system. In this case, for example, a copy message 168 as illustrated in Fig. 19 is displayed to notify the user of the copying.

The user can paste the text data of the voice memo text copied to the clipboard area onto the caption field 132 by a predetermined operation. That is, the user can use the voice memo text as caption data by a copy and paste operation.

Furthermore, the voice memo text area 134 may be automatically inserted into the caption field 132 by setting automatic caption assignment described later.

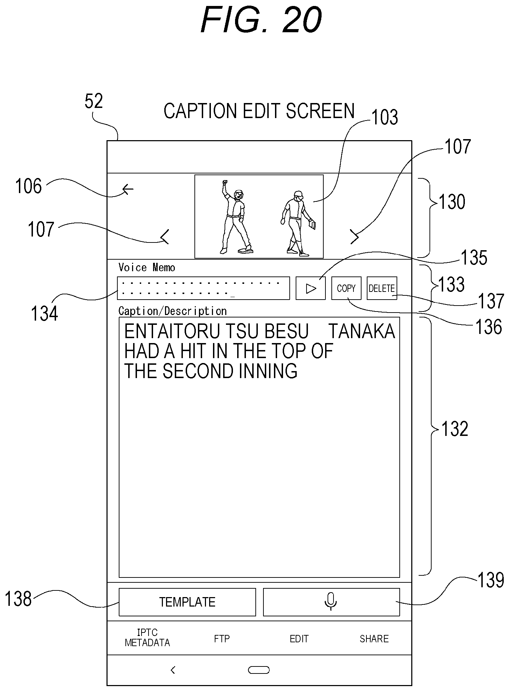

For example, Fig. 20 illustrates an example in which text data as voice memo text is added as caption data in a state where the caption edit screen 52 is opened. In this case, "entaitoru tsu besu" is the text previously input as the caption data, and the subsequent text data "Tanaka had a hit in the top of the second inning" is the automatically inserted voice memo text.

Note that in a case where the voice memo text is automatically inserted into the caption data as described above, if the text of the caption data exists first, it is conceivable to insert the voice memo text before or after the caption. In the case of automatic insertion, it is desirable to add voice memo text after the already input caption in order to facilitate understanding of the contents of the already input caption.

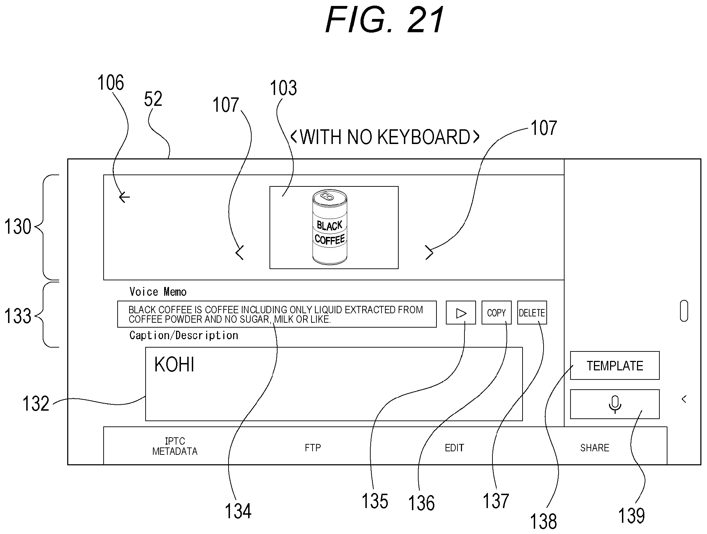

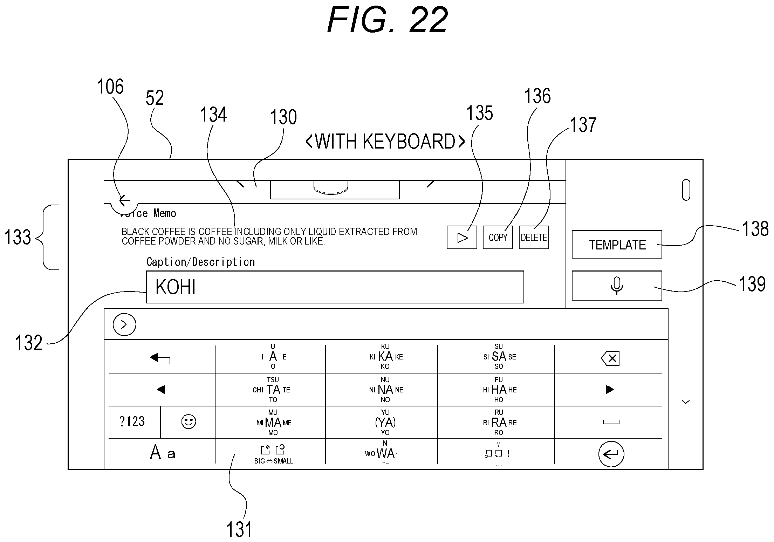

Note that Figs. 21 and 22 illustrate display examples in a case where the information processing device 2, which is a smartphone, is used in the landscape orientation. While the display contents of Fig. 21 are similar to those of Fig. 14, the area arrangement corresponds to the horizontal screen.

Furthermore, Fig. 22 illustrates a state in which the same display contents as those in Fig. 16 are displayed, and the software keyboard 131 for inputting characters to the caption field 132 is displayed. In this case, since the vertical size of the screen is smaller than that in Fig. 16, the image field 130, the voice memo field 133, and the caption field 132 are shifted upward as a whole, whereas the caption field 132 is visible even when the software keyboard 131 is displayed.

Note that as illustrated in Figs. 14, 16, 17, 20, 21, and 22, a return button 106 is provided on the caption edit screen 52. When the return button 106 is operated, the display returns to the image list screen 50, for example.

Next, interface screens for voice memo processing and upload settings will be described.

Among the menu items on the menu screen 55 described above, operations from the setting item 147 and the voice memo automatic caption assignment item 148 will be described as items related to processing of the present embodiment.

The voice memo automatic caption assignment item 148 is an item that allows the user to, when a voice memo is converted into text, select whether or not to automatically add the voice memo text to caption data.

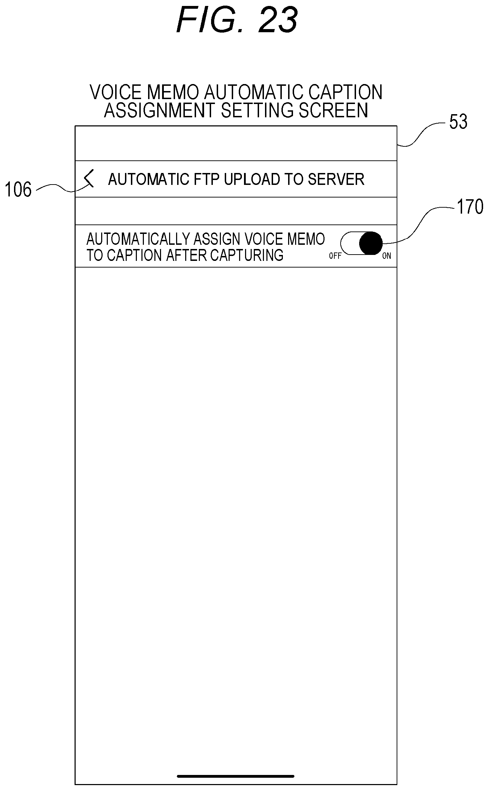

When the user operates the voice memo automatic caption assignment item 148, a voice memo automatic caption assignment setting screen 53 in Fig. 23 is displayed. A setting switch 170 is displayed on the voice memo automatic caption assignment setting screen 53, so that the user can set ON/OFF of the voice memo automatic caption assignment function.

When the setting switch 170 is turned on, in a case where voice memo text is obtained, the voice memo text is automatically inserted into caption data as illustrated in Fig. 20.

When the setting switch 170 is turned off, such automatic insertion is not performed.

The voice memo automatic caption assignment setting screen 53 is provided with the return button 106, and when the return button 106 is operated, the display returns to the menu screen 55 of Fig. 7. The ON/OFF state of the setting button 170 is enabled in a state where the return button 106 is operated.

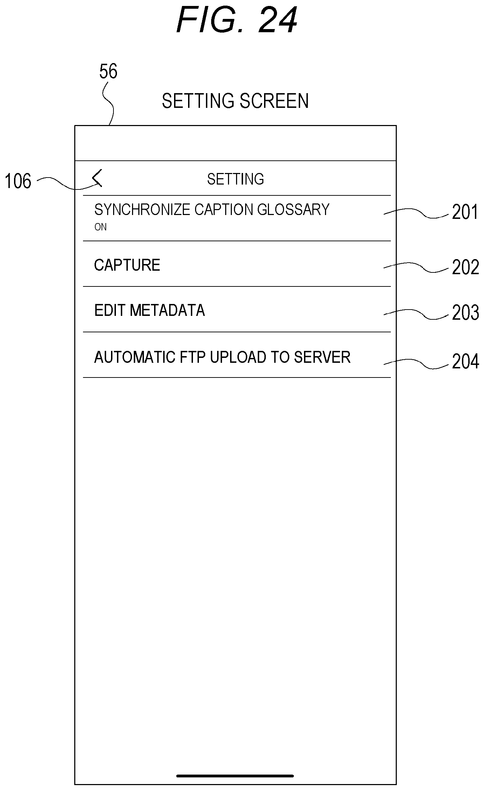

Furthermore, in the menu screen 55 of Fig. 7, when the user operates the setting item 147, a setting screen 56 of Fig. 24 is displayed. On the setting screen 56, as setting items, a caption glossary synchronization item 201, a capture item 202, a metadata edit item 203, and an automatic FTP upload item 204 are displayed. This is an example, as a matter of course.

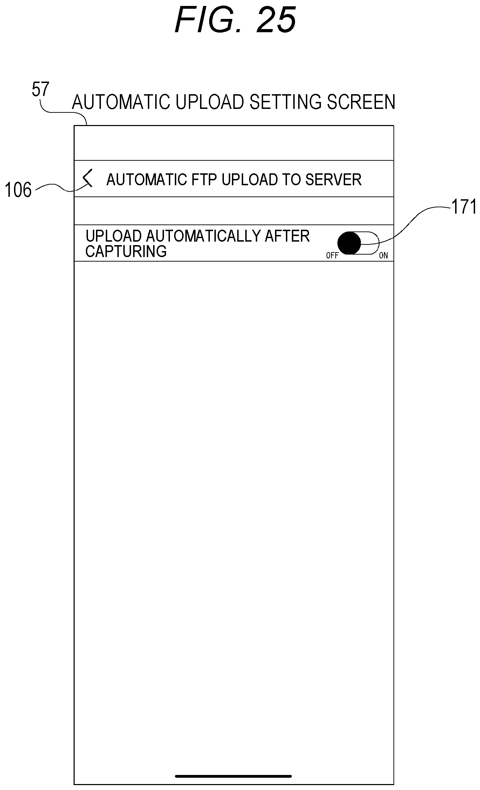

When the user operates the automatic FTP upload item 204 on the setting screen 56, an automatic upload setting screen 57 in Fig. 25 is displayed.

A setting switch 171 is displayed on the automatic upload setting screen 57, so that the user can set ON/OFF of automatic upload.

The automatic upload function is a function of automatically uploading the image file PF to the set FTP server 4 when the image file PF is transferred from the imaging device 1.
Fig. 25 illustrates a case where the setting switch 171 is in the OFF state.

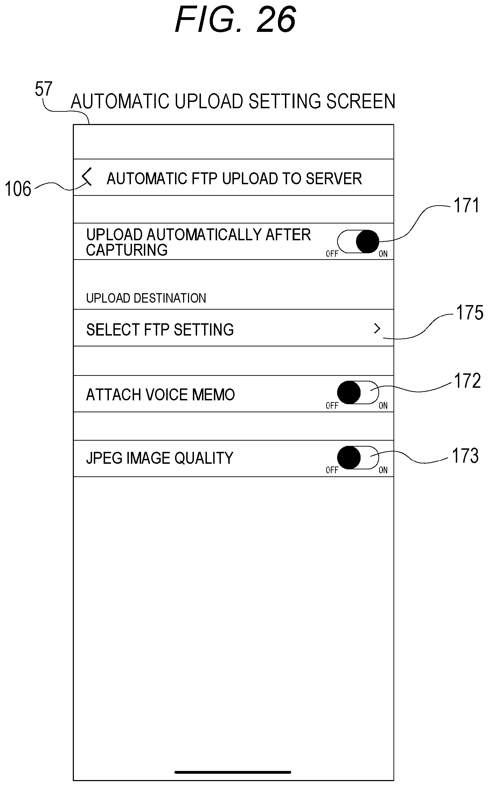

When the user turns on the setting switch 171, a display for automatic upload setting is presented as illustrated in Fig. 26. That is, an upload destination display field 175 is displayed, and a setting switch 172 related to voice memo attachment and a setting switch 173 related to JPEG image quality are displayed.

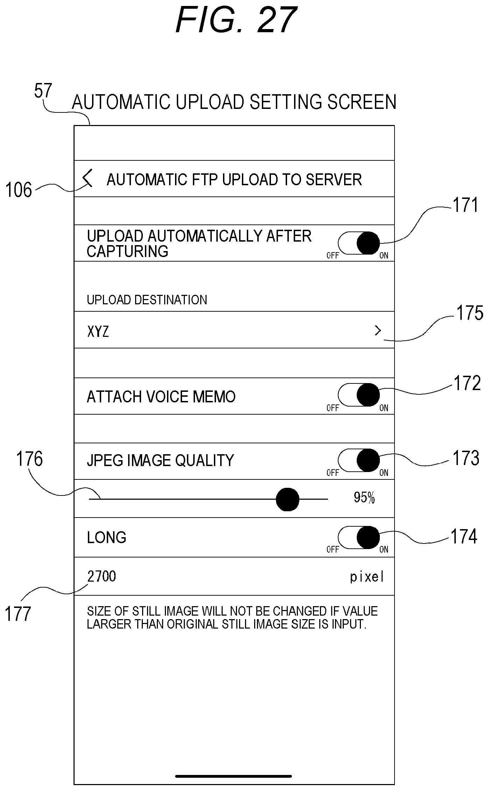

In Fig. 26, the upload destination display field 175 indicates that the upload destination has not yet been designated. When the user performs an operation of designating an upload destination, an upload destination specified by the name "XYZ" or the like assigned by the user at the time of FTP setting is displayed as illustrated in Fig. 27.

The setting switch 172 related to voice memo attachment allows the user to set whether or not to upload the audio file AF as a voice memo together with the image file PF at the time of automatic upload. For example, when the setting switch 172 is turned on as illustrated in Fig. 27, the audio file AF is also to be uploaded when the automatic upload processing is performed.

The setting switch 173 related to JPEG image quality allows the user to set a compression rate and an image size of the image data to be uploaded.

When the setting switch 173 is turned on, a compression rate setting bar 176, a long-side pixel setting section 177, and a setting switch 174 are displayed as illustrated in Fig. 27.

The user can operate the compression rate setting bar 176 to specify the compression rate. Furthermore, the number of pixels on the long side can be set by the setting switch 174.

The above user operation on the automatic upload setting screen 57 is enabled by operating the return button 106 to return to the setting screen 56 in Fig. 24.

Note that when the return button 106 is operated on the setting screen 56, the display returns to the menu screen in Fig. 7.

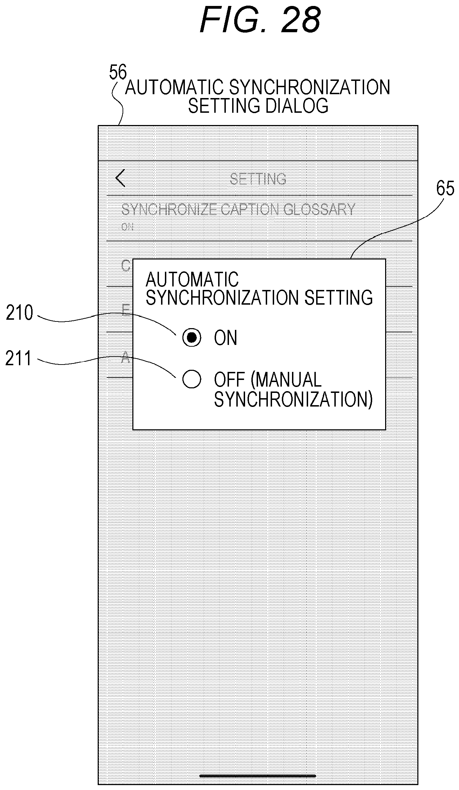

Subsequently, in a case where the caption glossary synchronization item 201 is operated on the setting screen 56 illustrated in Fig. 24, an automatic synchronization setting dialog 65 is superimposed and displayed as illustrated in Fig. 28.

On the automatic synchronization setting dialog 65, an ON option 210 to enable (ON) the automatic synchronization setting and an OFF option 211 to disable (OFF) the automatic synchronization setting are displayed.

The user can perform automatic synchronization setting of glossary data by operating the ON option 210. Furthermore, the user can cancel the automatic synchronization setting of glossary data and switch to manual synchronization setting by operating the OFF option 211.

The automatic synchronization setting of glossary data is, for example, a setting for automatically acquiring glossary data that can be used by the information processing device 2 when a predetermined screen is displayed.

Specifically, in a case where automatic synchronization setting is on, glossary synchronization processing is performed when the glossary list screen illustrated in Fig. 8 is displayed. In glossary synchronization processing, glossary data that is not stored in the information processing device 2 is downloaded and stored in the information processing device 2 from a predetermined server device or the like. As a result, glossary data that can be used by the information processing device 2 is updated to the latest data.

Alternatively, in glossary synchronization processing, estimated optimal glossary data to be currently used by the user may be downloaded to the information processing device 2. For example, the subject and the event of the image file PF to be subjected to caption editing are estimated on the basis of position information and time information of the information processing device 2, and glossary data related to the subject and the event is downloaded and stored in the information device 2.

As a result, the latest glossary data to be used for caption editing to be performed using the information processing device 2 is stored in the information processing device 2.

Note that the subject and the event may be estimated from metadata of the image file PF FTP-transferred from the imaging device 1. As a result, even in a case where the image file PF is FTP-transferred from the imaging device 1 to the information processing device 2 at a different location and caption editing is performed in the information processing device 2, appropriate glossary data is stored in the information processing device 2.

### <5. Processing example at time of image capture>

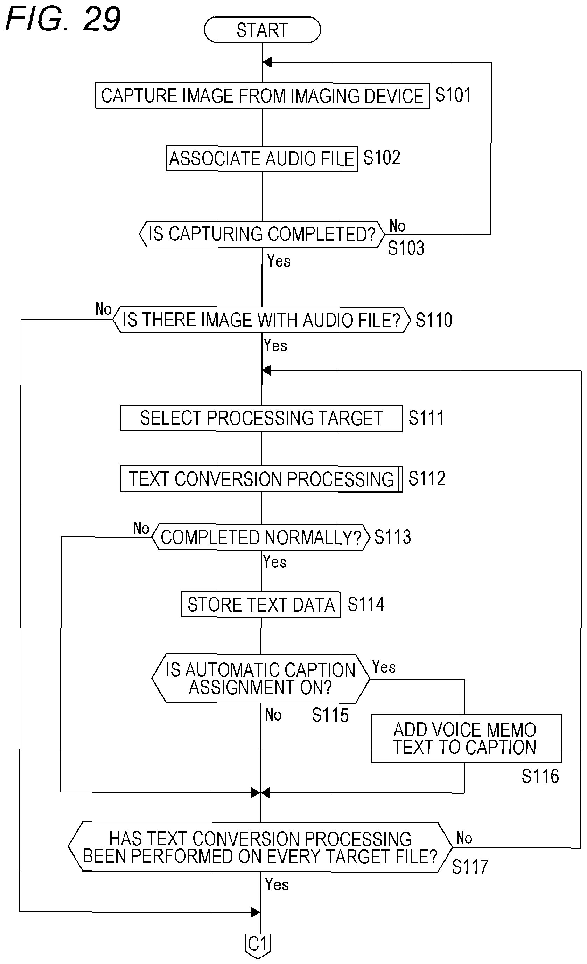

Among various processing performed by the information processing device 2, first, a processing example when the image file PF is captured from the imaging device 1 will be described with reference to Figs. 29, 30, 31, and 32.

Note that each processing example described below is processing performed by the function described in Fig. 5 implemented by application software by the CPU 71.

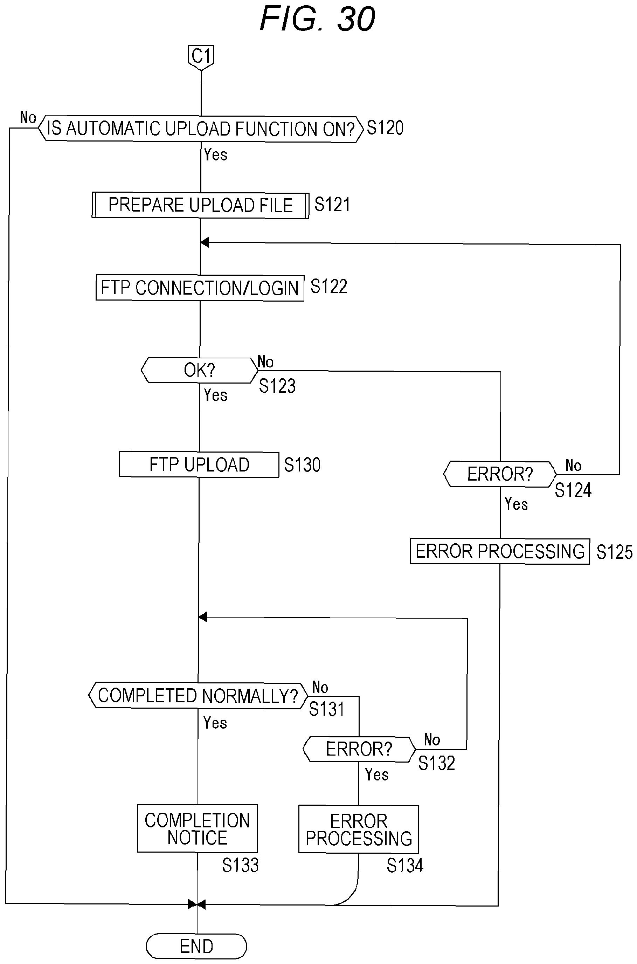

Figs. 29 and 30 illustrate parts of a series of flowcharts, and "C1" indicates the connection.

In step S101 of Fig. 29, the CPU 71 performs processing of capturing the image file PF from the imaging device 1.

The processing of capturing the image file PF from the imaging device 1 is performed, for example, by communication between the information processing device 2 and the imaging device 1, and transfer of the image file PF is started, for example, when the user performs a predetermined operation on the information processing device 2 side or the imaging device 1 side.

The imaging device 1 performs processing of transferring the image file PF selected as a transfer target to the information processing device 2 by FTP communication. Furthermore, in this case, in a case where there is an audio file AF having a voice memo associated with the image file PF, the audio file AF is also transferred to the information processing device 2.

On the information processing device 2 side, the CPU 71 performs processing of capturing the image file PF and the audio file AF sequentially transferred as the processing of step S101.

Here, between the imaging device 1 and the information processing device 2, in a case where there is an audio file AF associated with the image file PF, a rule is determined in which the audio file AF is transmitted first and then the image file PF is transmitted.

As a result, when receiving one audio file AF, the CPU 71 can determine that the audio file AF is associated with the image file PF to be received next. In step S102, the CPU 71 performs processing of managing the received audio file AF in association with the received image file PF according to such a rule.

Note that, in addition, it is also conceivable that metadata of the image file PF includes information specifying the associated audio file AF, for example. In step S102, processing of managing the received audio file AF in association with the received image file PF may be performed with reference to metadata.

When the capturing of one or multiple image files PF is completed, the CPU 71 proceeds from step S103 to step S110, and determines whether or not there is an image file PF with which an audio file AF is associated among the captured image files PF.

In a case where all the captured files are only the image file PF and the audio file AF does not exist, the CPU 71 proceeds from step S110 to step S120 in Fig. 30.

On the other hand, in a case where there is at least one image file PF with which an audio file AF is associated, the CPU 71 proceeds from step S110 to step S111 in Fig. 29.

In step S111, the CPU 71 selects one of one or multiple image files PF with which the audio file AF is associated among the currently captured image files PF as a processing target.

Then, in step S112, the CPU 71 performs text conversion processing on the voice memo of the audio file AF associated with the image file PF that is the processing target.

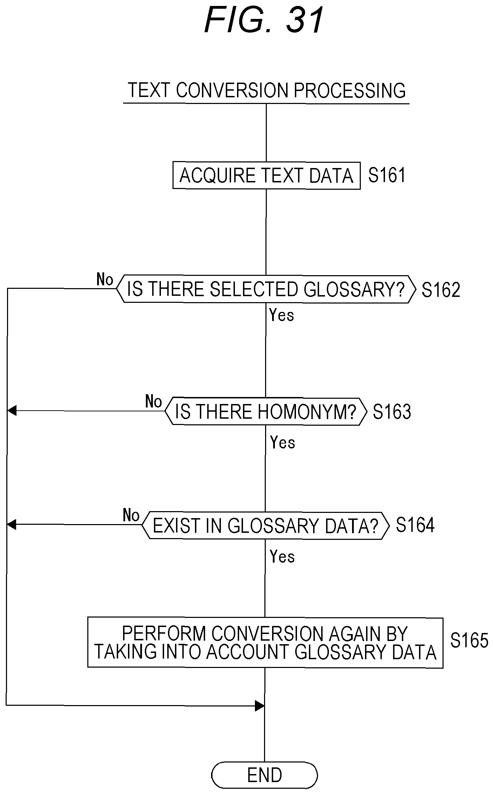

A specific example of the text conversion processing in step S112 is illustrated in Fig. 31.

In step S161, the CPU 71 acquires text data corresponding to the voice memo.

The text data is acquired, for example, by transmitting audio data as a voice memo to the text conversion engine 5 and receiving data converted into text. Alternatively, in a case where the text conversion engine 83 is mounted in the information processing device 2, the text conversion processing may be performed by the text conversion engine 83.

In subsequent step S162, the CPU 71 determines whether or not there is the selected glossary data. The selection of the glossary data can be performed by operating a selection button displayed on the glossary list screen of Fig. 8.

In a case where there is no selected glossary, the CPU 71 ends the text conversion processing, and proceeds to step S113 in Fig. 29. That is, correction of the text data based on the glossary data is not performed.

On the other hand, in a case where there is a selected glossary, the CPU 71 proceeds to step S163 and determines whether or not there are homonyms in the acquired text data.

In a case where there is a homonym, the CPU 71 determines in step S164 whether or not the homonym is registered in the selected glossary data.

In a case where the homonym is registered, the CPU 71 corrects the text data acquired in step S161 by replacing it with the homonym registered in the glossary data in step S165.

As a result, for example, in a case where there are multiple conversion candidates such as Japanese personal names, the name is converted into an appropriate personal name.

In a case where it is determined in step S163 that there is no homonym, or in a case where it is determined in step S164 that the homonym is not registered in the glossary data, the CPU 71 terminates the text conversion processing illustrated in Fig. 31, and proceeds to step S113 in Fig. 29.

In step S113, the CPU 71 determines whether or not the text conversion has been performed normally.

In a case where the text conversion has been performed normally and the voice memo text can be acquired, the CPU 71 proceeds from step S113 to step S114, and performs processing of storing the voice memo text in the storage unit 79, for example, as the voice memo text corresponding to the image file PF to be processed.

In step S115, the CPU 71 confirms whether or not the automatic caption assignment function is turned on. The automatic caption assignment function is a function that the user can arbitrarily set ON/OFF on the voice memo automatic caption assignment setting screen 53 in Fig. 23.

In a case where the automatic caption assignment function is not turned on, the CPU 71 proceeds to step S117.

In a case where the automatic caption assignment function is ON, the CPU 71 proceeds to step S116 and performs processing of inserting voice memo text into caption data. That is, the CPU 71 performs processing of writing the voice memo text in the description/caption field in the IPTC metadata. As described above, in a case where caption data is already written in the description/caption field, the CPU 71 writes voice memo text after the already written caption data.

After performing such automatic caption assignment processing, the CPU 71 proceeds to step S117.

In a case where the text conversion in step S112 has not been performed normally, for example, in a case where voice memo text cannot be acquired due to a processing error, a communication error, or the like, the CPU 71 proceeds from step S113 to step S117. In this case, retry of the text conversion processing is not particularly performed, thereby avoiding prolongation of processing at the time of transfer. This is because there are other opportunities for text conversion as described later. Note, however, that retry of the text conversion processing can obviously be performed a predetermined number of times, or the user may select whether or not to proceed with the processing without text conversion.

In a case where the processing such as the above-described text conversion processing and voice memo automatic caption assignment is performed on a certain image file PF and the processing proceeds to step S117, or in a case where the text conversion is not completed normally and the processing proceeds to step S117, the CPU 71 confirms whether or not there is any other image file PF to be subjected to similar processing, returns to step S111 if there is any image file PF, and performs processing similar to that described above with the one image file PF as the processing target.

By performing the text conversion processing in step S112 at least once for all the image files PF with which an audio file AF is associated, it is determined in step S117 that text conversion has been completed for all the image files PF, and the processing proceeds to step S120 in Fig. 30.

In step S120, the CPU 71 confirms whether or not the automatic upload function is turned on. The automatic upload function is a function that the user can arbitrarily set ON/OFF on the automatic upload setting screen 57 illustrated in Figs. 25, 26, and 27.

If the automatic upload function is not turned on, the CPU 71 terminates the series of processing at the time of capturing an image from step S120.

If the automatic upload function is on, the CPU 71 proceeds from step S120 to step S121, and performs preparation processing of the upload file.

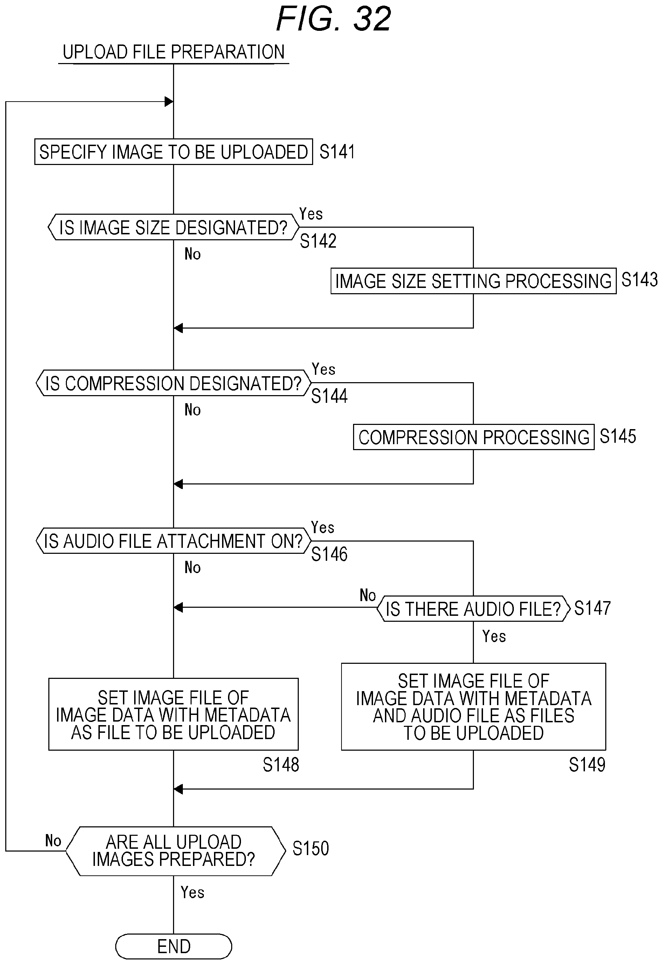

This upload file preparation processing is illustrated in detail in Fig. 32.

In step S141 of Fig. 32, the CPU 71 specifies one of the image files PF to be uploaded. This means that one of the image files PF transferred from the imaging device 1 this time is to be subjected to the preparation processing.

If one image file PF is set as a processing target, the CPU 71 confirms whether or not the image size is designated in step S142. This means that the user confirms the contents set by the long-side pixel setting section 177 and the setting switch 174 on the automatic upload setting screen 57 in Fig. 27. If the image size is designated, the CPU 71 performs conversion processing of the number of pixels reflecting the designation in step S143.

In step S144, the CPU 71 confirms whether or not a compression rate is designated. This means that the state of the compression rate designated by the compression rate setting bar 176 on the automatic upload setting screen 57 in Fig. 27 is confirmed. If compression is set to be performed with the designated compression rate, the CPU 71 performs compression processing using the designated compression rate in step S145.

In step S146, the CPU 71 confirms whether or not the audio file AF is attached. That is, the setting of whether or not to upload the voice memo of the user by turning ON/OFF the setting switch 172 of Fig. 27 is confirmed.

In a case where upload of the audio file AF is selected, the CPU 71 proceeds to step S147 and confirms whether or not there is an associated audio file AF for the image file PF currently being processed. In a case where the related audio file AF exists, the CPU 71 proceeds to step S149, and sets the currently processed image file PF (image data and metadata) and audio file AF as files to be uploaded.

When it is confirmed in step S146 that upload of the audio file AF is not selected as the setting by the user, or in a case where there is no associated audio file AF for the currently processed image file PF in step S147, the CPU 71 proceeds to step S148 and sets the currently processed image file PF (image data and metadata) as the file to be uploaded.

In step S150, it is confirmed whether or not the above-described preparation processing has been completed for all the image files PF captured from the imaging device 1 this time. In a case where there is a remaining image file PF, the CPU 71 returns to step S141, specifies one of the remaining image files PF as a processing target, and performs similar processing. In a case where it is determined in step S150 that the preparation processing described above has been completed for all the image files PF captured from the imaging device 1 this time, the CPU 71 terminates the preparation processing of the upload file illustrated in Fig. 32. That is, the CPU 71 proceeds to step S122 in Fig. 30.

In step S122, the CPU 71 performs processing of FTP connection and login to the FTP server 4 designated in the automatic upload setting.

Then, when the login is completed, the CPU 71 proceeds from step S123 to step S130 and performs the FTP upload processing. That is, processing of sequentially performing FTP transmission of the image file PF and the audio file AF set to be the upload target in the upload file preparation processing is performed.

Note that when communication with the FTP server 4 fails, or when login fails even though communication is successful, the CPU 71 proceeds from step S124 to step S125 as an error and performs predetermined error processing. For example, the user is notified of an error in the automatic upload processing. Then, the series of processing at the time of capturing the image file PF from the imaging device 1 is terminated.

When the FTP upload in step S130 is completed normally, the CPU 71 proceeds from step S131 to step S133, notifies the user of the completion, and terminates the series of processing. In this case, at the time of capturing the image file PF from the imaging device 1, uploading to the FTP server 4 is performed automatically.

Moreover, if the voice memo automatic caption assignment function is turned on, the voice memo text obtained by converting the voice memo of the associated audio file AF into text is added to the IPTC metadata in the image file PF to be uploaded.

In a case where an error occurs in the upload processing to the FTP server 4 and the processing cannot be completed normally, the CPU 71 proceeds from step S132 to step S134 and performs predetermined error processing. For example, the user is notified of an error in the automatic upload processing. Then, the series of processing at the time of capturing the image file PF from the imaging device 1 is terminated.

### <6. Processing example including text conversion and caption editing>

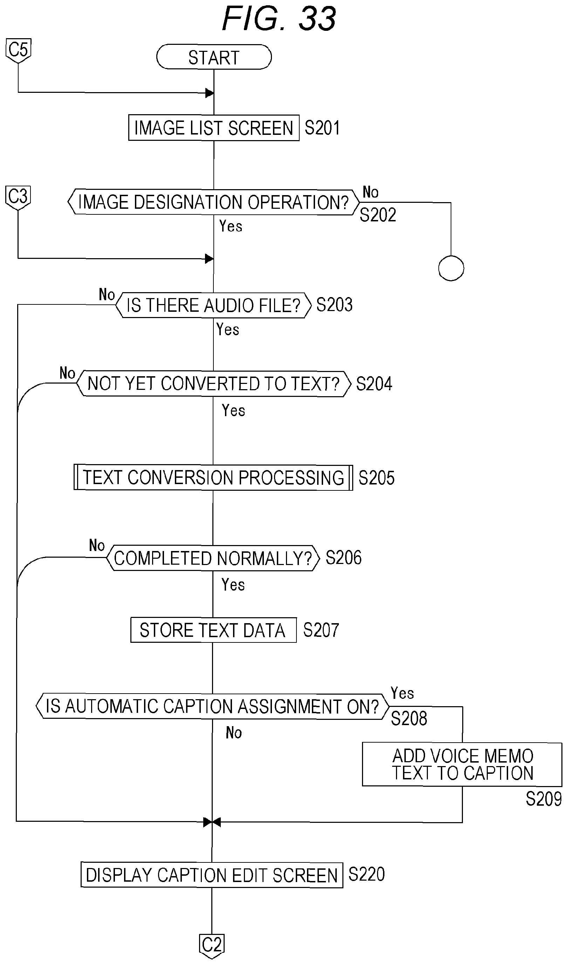

Next, a processing example in a case where transition is made from the state in which the image list screen 50 of Fig. 6 is displayed to the caption edit screen 52 of Fig. 14 and the like will be described with reference to Figs. 33, 34, and 35.

Note that Figs. 33, 34, and 35 illustrate parts of a series of flowcharts, and "C2", "C3", "C4", and "C5" indicate the connections.

In step S201 of Fig. 33, the CPU 71 displays the image list screen 50.

When the user performs an operation to designate a certain image on the image list screen 50 as described above, the caption edit screen 52 for the image data is displayed. At this time, if the designated image data (image file PF) has not yet been subjected to voice memo text conversion, the text conversion is performed at this timing.

When detecting an image designation operation by the user on the image list screen 50, the CPU 71 proceeds from step S202 to step S203.

In step S203, the CPU 71 confirms whether or not there is an audio file AF associated with the designated image data (image file PF).

If there is no associated audio file AF, the processing proceeds to step S220, and the CPU 71 displays the caption edit screen 52 for the designated image data. In this case, since there is no voice memo, the voice memo field 133 does not need to be displayed on the caption edit screen 52.

In a case where an associated audio file AF exists, the CPU 71 proceeds to step S204, and confirms whether or not the voice memo has already been converted into text and the voice memo text has been stored. If the voice memo text has already been stored, the processing proceeds to step S220, and the CPU 71 displays the caption edit screen 52 for the designated image data. In this case, as illustrated in Fig. 14, the voice memo field 133 displaying the voice memo text area 134 is displayed. Furthermore, if the automatic caption assignment function is turned on and the voice memo text is inserted into the caption data, the voice memo text is added to the caption data in the caption field 132, too, as illustrated in Fig. 20.

In a case where it is determined that there is a voice memo but the voice memo has not been converted into text, the CPU 71 proceeds to step S205 and performs text conversion processing on the voice memo of the audio file AF associated with the designated image file PF. For example, audio data as a voice memo is transmitted to the text conversion engine 5, and the data converted into text is received. Alternatively, in a case where the text conversion engine 83 is mounted in the information processing device 2, the text conversion processing may be performed by the text conversion engine 83. Note that, in this text conversion processing, as described above with reference to Fig. 31, text conversion based on the selected glossary data is performed.

In a case where the text conversion has been performed normally and the voice memo text can be acquired, the CPU 71 proceeds from step S206 to step S207, and performs processing of storing the voice memo text in the storage unit 79, for example, as the voice memo text corresponding to the image file PF to be processed.

In step S208, the CPU 71 confirms whether or not the automatic caption assignment function is turned on. The automatic caption assignment function is a function that the user can arbitrarily set ON/OFF on the voice memo automatic caption assignment setting screen 53 in Fig. 23.

If the automatic caption assignment function is not turned on, the CPU 71 proceeds to step S220. In this case, the voice memo field 133 is displayed on the caption edit screen 52 as illustrated in Fig. 14, and caption data input by that time is displayed in the caption field 132.

On the other hand, if the automatic caption assignment function is on, the CPU 71 proceeds to step S209 and performs processing of inserting the voice memo text into the caption data. That is, the CPU 71 performs processing of writing the voice memo text in the description/caption field in the IPTC metadata. As described above, in a case where caption data is already written in the description/caption field, the CPU 71 writes voice memo text after the already written caption data.

After performing such automatic caption assignment processing, the CPU 71 proceeds to step S220. In this case, the caption edit screen 52 is in a state in which voice memo text is added to the caption data in the caption field 132, too, as illustrated in Fig. 20.

In a case where the text conversion in step S205 has not been performed normally, the CPU 71 proceeds from step S206 to step S220. In this case, since the voice memo cannot be converted into text, it is conceivable that the voice memo field 133 is not displayed on the caption edit screen 52. Note, however, that it is conceivable to clearly indicate the presence of the voice memo to the user by the voice memo mark 105.

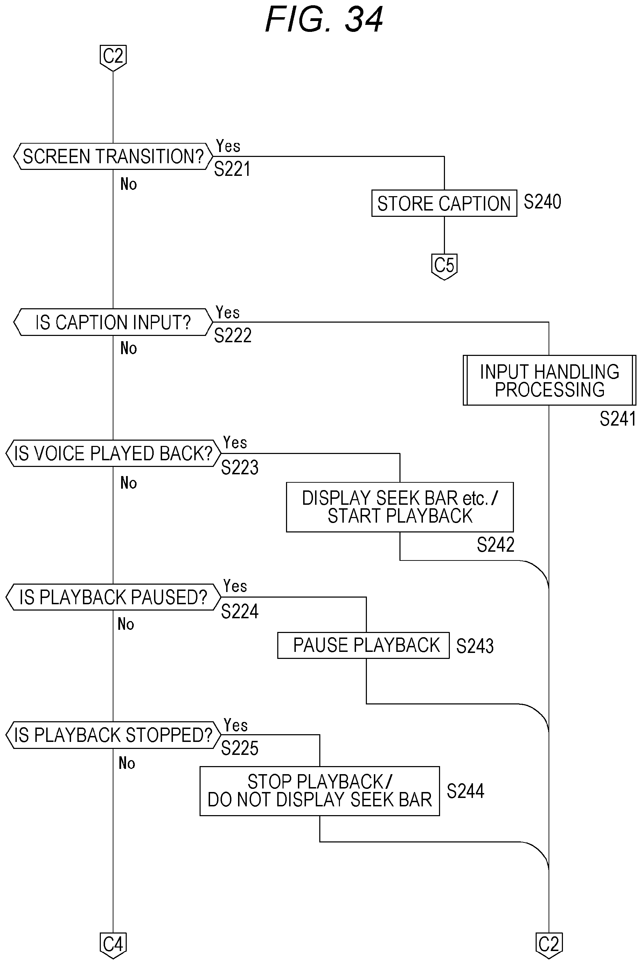

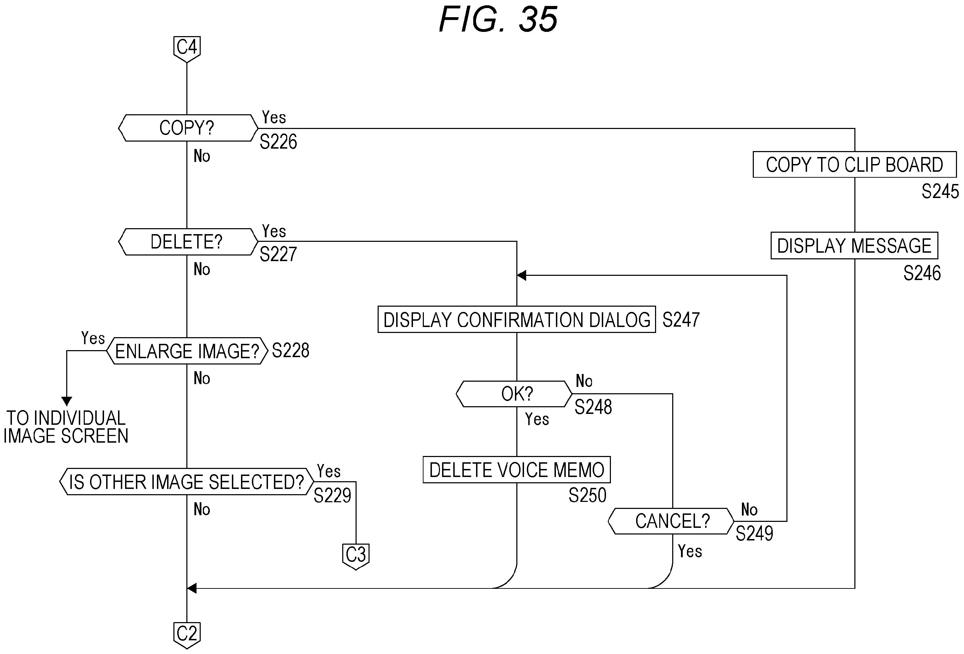

With the caption edit screen 52 displayed, the processing of the CPU 71 proceeds to step S221 in Fig. 34. The CPU 71 monitors various user operations on the caption edit screen 52. That is, the operations are monitored in a loop of steps S221, S222, S223, S224, and S225, and steps S226, S227, S228, and S229 in Fig. 35.

In step S221 of Fig. 34, the CPU 71 monitors screen transition by the return button 106, that is, operation of transition to the image list screen 50. When this operation is detected, the CPU 71 performs caption storage processing in step S240, and returns to step S201 in Fig. 33. That is, the caption data displayed in the caption field 132 at that time is stored as the data of the description/caption field in IPTC metadata.

In step S222, the CPU 71 monitors an operation related to caption input. In response to an operation related to caption input, such as character input, voice input, or template request, the CPU 71 performs input handling processing in step S241.

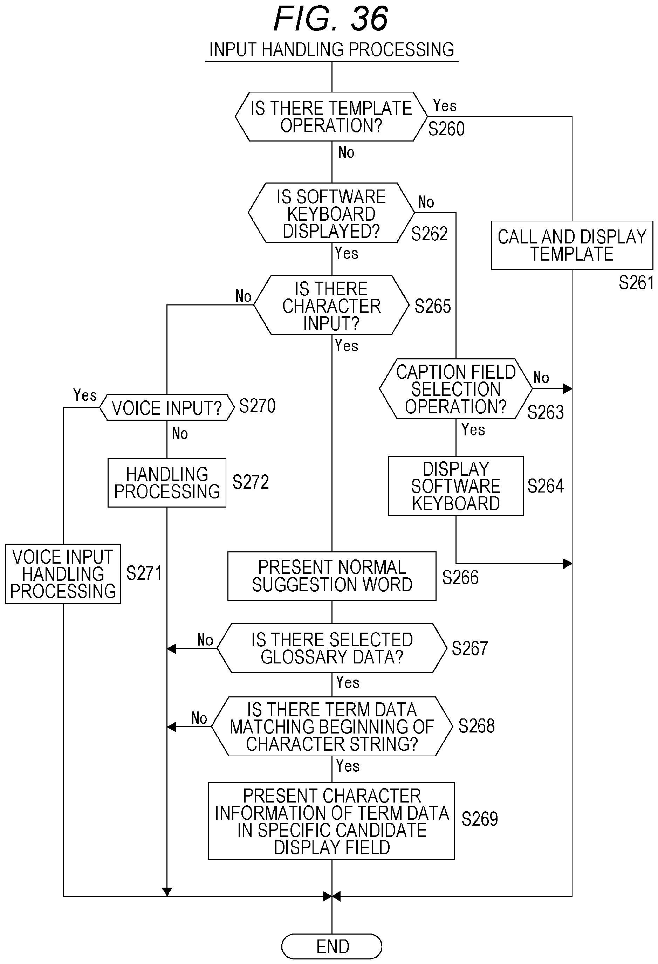

The input handling processing will be described with reference to Fig. 36.

In step S260, the CPU 71 confirms whether or not the template button 138 is operated. When detecting the operation on the template button 138, the CPU 71 calls and displays a template in step S261.

In a case where operation on the template button 138 is not detected, the CPU 71 performs branch processing based on whether or not the software keyboard 131 is being displayed in step S262.

In a case where the software keyboard 131 is not displayed, that is, in a case where the caption edit screen 52 as illustrated in Fig. 14 is displayed on the information processing device 2, the CPU 71 confirms, in step S263, whether or not there is an operation to display the software keyboard 131, such as a tap operation on the caption field 132. When detecting the operation, the CPU 71 proceeds to step S264, performs processing of displaying the software keyboard 131 on the screen, and terminates the input handling processing. As a result, for example, the caption edit screen 52 as illustrated in Fig. 16 is displayed on the information processing device 2.

In a case where the caption field selection operation is not detected in step S263, the CPU 71 terminates the input handling processing.

In a case where it is determined in step S262 that the software keyboard is already displayed, the CPU 71 proceeds to step S265 and determines whether or not a character input operation is detected.

When character input is detected, the CPU 71 presents a normal suggestion word in step S266. In the presentation of the normal suggestion word, a character string (word or sentence) frequently input in the information processing device 2 or a character string input last is presented in the normal candidate display field 191a as a suggestion word.

Furthermore, the CPU 71 determines the presence or absence of selected glossary data in step S267, and in a case where there is selected glossary data, determines whether or not there is term data matching the beginning of the character string in subsequent step S268. In the example illustrated in Fig. 16, the term data matching the beginning of the character string is, for example, term data in which a character string starting from the character string "enta" already input by the user is set as the reading or shortcut of the term data. This term data must be term data registered in the selected glossary data, as a matter of course.

In a case where there is such term data, in step S269, the CPU 71 presents character information of the corresponding term data, that is, a character string "entaitoru tsu besu" in the specific candidate display field 191b.

As a result, the suggestion field 191 illustrated in Fig. 16 is formed.

After presenting the character information of the term data in the specific candidate display field 191b, the CPU 71 terminates the input handling processing.

Furthermore, in a case where there is no selected glossary data or in a case where there is no term data matching the beginning of the character string, the CPU 71 terminates the input handling processing.

In a case where character input is not detected in step S265, the CPU 71 determines the presence or absence of voice input in step S270. When detecting voice input, the CPU 71 performs voice input handling processing in step S271.

As the voice input handling processing, for example, processing of acquiring input audio data and transmitting the audio data to the text conversion engine 5 is performed. Furthermore, the converted text data is received from the text conversion engine 5 and inserted into the caret position. Note that at this time, as described above with reference to Fig. 31, the correction processing using the selected glossary data may be performed on the text data obtained by text conversion by the text conversion engine 5. As a result, the probability of erroneous conversion can be reduced.

In a case where voice input is not detected in step S270, the CPU 71 performs handling processing in step S272. This handling processing is processing performed on the basis of an operation related to some caption input detected in step S222.

For example, the processing is paste processing corresponding to a pasting operation, caret movement processing corresponding to a movement operation of a caret position, or the like. Furthermore, processing of inserting a character string selected from the character string presented in the above-described suggestion field 191 into the caret position, for example, is also performed as the handling processing.

The description returns to Fig. 34.

In step S223, the CPU 71 monitors the operation of the playback button 135 by the user. When detecting an operation of the playback button 135, the CPU 71 proceeds to step S242, and performs control to set the voice memo field 133 to the display state at the time of playback with the seek bar 160, the current time 161, the total playback length 162, the stop button 163, the pause button 164, and the like as illustrated in Fig. 17, and to start audio playback.

In step S224, the CPU 71 monitors the operation of the pause button 164 by the user. When detecting an operation of the pause button 164, the CPU 71 proceeds to step S243 and performs control to pause audio playback. Note that although not illustrated, in this case, the pause button 164 is switched to display of the playback button 135.

In step S225, the CPU 71 monitors the operation of the stop button 163 by the user. When detecting an operation of the stop button 163, the CPU 71 proceeds to step S244 and performs control to stop audio playback. In this case, the display of the voice memo field 133 is returned to the state of Fig. 14.

In step S226 of Fig. 35, the CPU 71 monitors the operation of the copy button 136 by the user. When detecting an operation of the copy button 136, the CPU 71 proceeds to step S245 and performs processing of copying the voice memo text to the clipboard. Then, in step S246, the CPU 71 displays the copy message 168 in Fig. 19 for a predetermined time or until detection of the next user operation.

Note that in a case where the CPU 71 subsequently detects a paste operation in step S222, the voice memo text copied to the clipboard is pasted as caption data in step S241.

In step S227, the CPU 71 monitors the operation of the delete button 137 by the user. When detecting an operation of the delete button 137, the CPU 71 proceeds to step S247 and displays the confirmation dialog 61 of Fig. 18. The CPU 71 monitors whether or not the OK button 165 has been operated in step S248, and in response to the operation of the OK button 165 by the user, the CPU 71 performs deletion processing regarding the voice memo in step S250.

On the other hand, in a case where operation of the OK button 165 by the user is not detected, the CPU 71 proceeds to step S249 and detects the presence or absence of operation on the cancel button. In a case where the user operates the cancel button 166 on the confirmation dialog 61, the CPU 71 does not perform the deletion processing, and returns to monitoring of the user operation by returning from step S249 to step S221.

In step S228, the CPU 71 monitors the image enlargement operation. For example, when the image enlargement operation is performed as a pinch operation, a double tap or the like on the thumbnail image 103, the individual image screen 51 in Fig. 15 is displayed.

Although not illustrated in the flowchart, after the transition to the individual image screen 51, a different image is selected according to a predetermined operation, the screen returns to the image list screen 50, or the display transitions to the caption edit screen 52.

In step S229, the CPU 71 monitors selection operation of another image. That is, the CPU 71 monitors the operation of the feed button 107 on the caption edit screen 52. When detecting an operation of the feed button 107, the CPU 71 proceeds to step S203 in Fig. 33. That is, assuming that a previous or subsequent image is newly designated, the CPU 71 performs the processing from step S203 to step S209 on the designated image data in a manner similar to that described above, and displays the caption edit screen 52 for the image data in step S220.

When a piece of image data is designated as described above, text conversion processing and processing of the automatic caption assignment function may be performed. Furthermore, on the caption edit screen 52, display, playback, deletion, copying, pasting to caption data, manual or audio caption input, and the like, of the voice memo text can be performed.

<7. Processing example at time of upload>

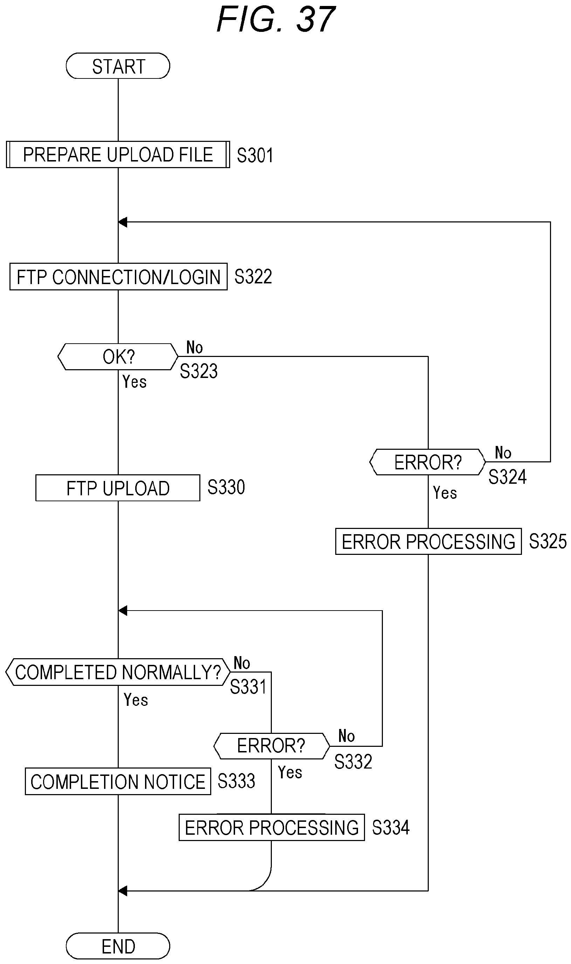

Fig. 37 illustrates processing at the time of upload to the FTP server 4. For example, when the user designates the image file PF to be uploaded and the FTP server 4 as the upload destination, and gives an instruction to perform upload, the upload processing of Fig. 37 is started.

The CPU 71 performs upload file preparation processing in step S301. This is similar to the processing in Fig. 32 described above.

In step S322, the CPU 71 performs processing of FTP connection and login to the FTP server 4 as the upload destination designated by the user.

Then, when the login is completed, the CPU 71 proceeds from step S323 to step S330 and performs FTP upload processing. That is, processing of sequentially performing FTP transmission of the image file PF and the audio file AF set to be the upload target in the upload file preparation processing is performed.

Note that when communication with the FTP server 4 fails, or when login fails even though communication is successful, the CPU 71 proceeds from step S324 to step S325 as an error and performs predetermined error processing. For example, the user is notified of an error in the upload processing. Then, the CPU 71 terminates the upload processing with an error.

When the FTP upload in step S330 is completed normally, the CPU 71 proceeds from step S331 to step S333, notifies the user of the completion, and terminates the upload processing.

In the uploaded image file PF, it is assumed that the voice memo text is reflected as caption data in the IPTC metadata by the automatic caption assignment function or the user's copy and paste operation.

Furthermore, a case where the audio file AF is uploaded together according to the setting of the user is also assumed.

In a case where an error occurs in the upload processing to the FTP server 4 and the processing cannot be completed normally, the CPU 71 proceeds from step S332 to step S334 and performs predetermined error processing. For example, the user is notified of an error in the upload processing. Then, the CPU 71 terminates the upload processing with an error.

### <8. Processing regarding glossary data>

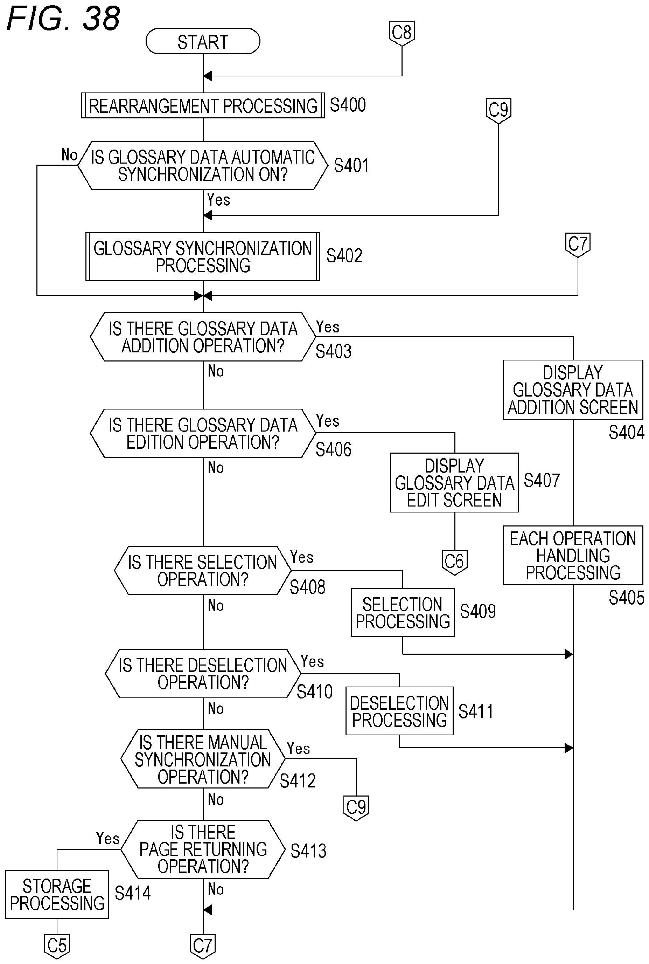

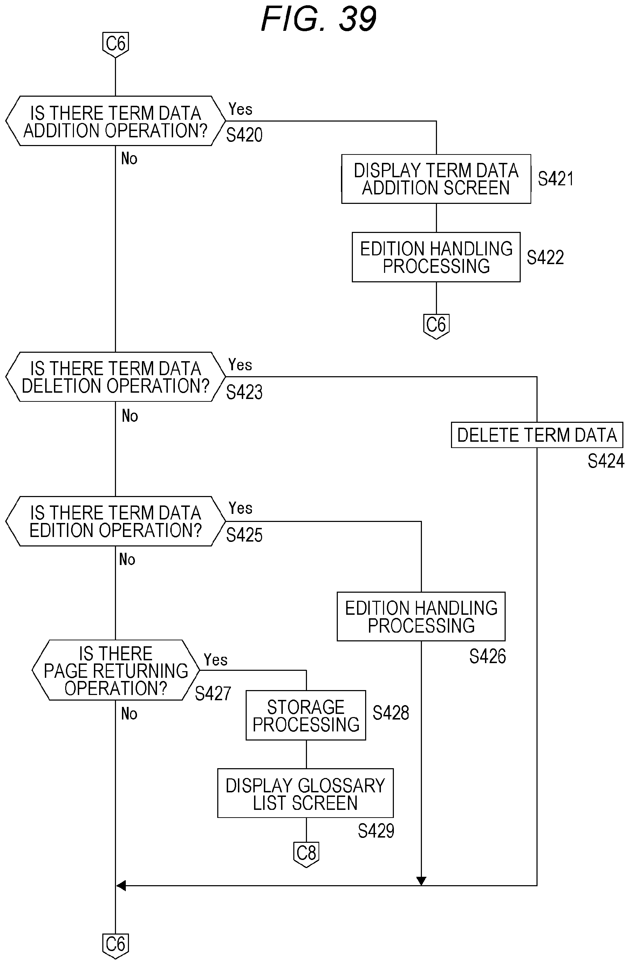

An example of processing performed by the information processing device 2 in a state where the glossary list screen 58 of Fig. 8 is displayed will be described with reference to Figs. 38 and 39.

Note that Figs. 38 and 39 illustrate parts of a series of flowcharts, and "C6", "C7", "C8", and "C9" indicate the connections.

After performing the processing of displaying the glossary list screen 58 in Fig. 8, the CPU 71 performs processing of rearranging the glossary data in step S400. Rearrangement processing is processing of changing the arrangement of glossary data on the glossary list screen 58 in a predetermined order, and will be specifically described later.

Subsequently, in step S401, the CPU 71 determines whether or not the glossary data automatic synchronization setting is turned on. The glossary data automatic synchronization setting is a function that allows the user to arbitrarily set ON/OFF with the automatic synchronization setting dialog 65 of Fig. 28.

In a case where the glossary data automatic synchronization setting is turned on, the CPU 71 performs glossary synchronization processing in step S402 and proceeds to step S403.

On the other hand, in a case where the glossary data automatic synchronization setting is turned off, the CPU 71 proceeds to step S403 without performing the processing of step S402.

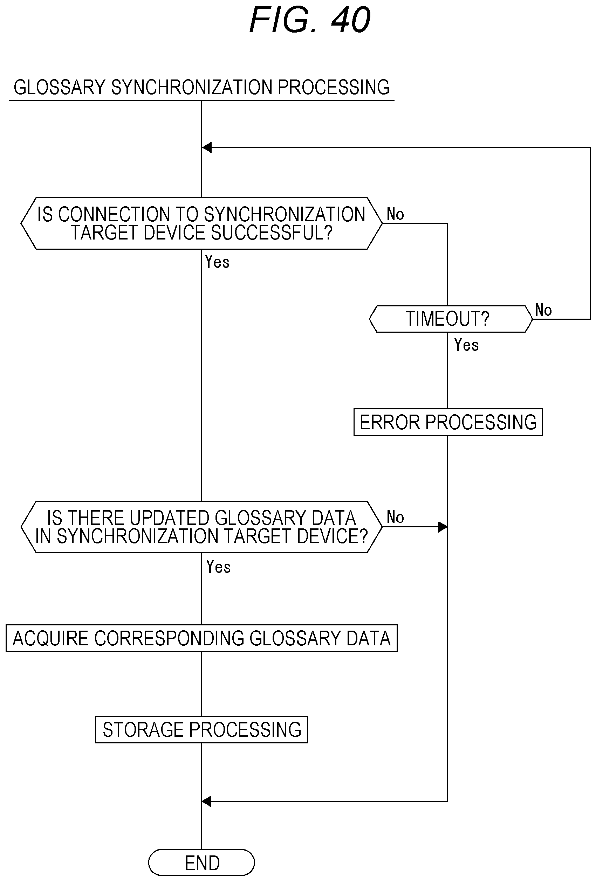

Here, the glossary synchronization processing performed only when the glossary data automatic synchronization setting is turned on will be described with reference to Fig. 40.

The glossary synchronization processing is processing of acquiring glossary data stored in another information processing device different from the information processing device 2.

In step S440, the CPU 71 attempts connection to a synchronization target device (another information processing device), and determines whether or not the connection is successful.

In a case where the connection success is not yet confirmed, the CPU 71 determines in step S441 whether or not a timeout has occurred due to the elapse of a predetermined time. The CPU 71 repeats the processing of steps S440 and S441 until a timeout occurs. In a case where it is determined that a timeout has occurred, the CPU 71 performs error processing in step S442 and terminates the glossary synchronization processing. In the error processing, notification processing or the like for the user is performed, for example.

In a case where it is determined in step S440 that the connection to the synchronization target device is successful, the CPU 71 determines in step S443 whether or not there is updated glossary data in the synchronization target device.

Updated glossary data is new glossary data that is not yet stored in the information processing device 2, glossary data having a time stamp newer than that of the glossary data stored in the information processing device 2, or the like.

In a case where there is updated glossary data, the CPU 71 acquires the corresponding glossary data in step S444, and performs processing of storing the glossary data in the storage unit 79 or the like in subsequent step S445. This storage processing is processing of newly storing glossary data, processing of overwriting glossary data already stored, and the like.

Note that in addition to acquiring the glossary data from another information processing device and storing the glossary data in the storage unit 79 or the like of the information processing device 2, the above-described processing may proceed by appropriately acquiring necessary term data while communicating with another information processing device. That is, the processing may be performed by regarding another information processing device as a cloud server without downloading the glossary data to the information processing device 2.

Furthermore, another information processing device may be a shared server that can be used by multiple users. As a result, by storing the glossary data created by one user in the shared server, multiple users can use the glossary data, and it is possible to save time and effort to create the glossary data for each user. Furthermore, caption data can be made uniform by editing the caption data using the same glossary data. As a result, the automatic distribution processing of the image files PF performed by the FTP server 4 can be reliably performed, and distribution mistakes can be reduced.

After terminating the storage processing, the CPU 71 terminates the glossary synchronization processing and proceeds to step S403 in Fig. 38.

Furthermore, in a case where it is determined in step S443 that there is no updated glossary data, the processing proceeds to step S403, too.

The description returns to Fig. 38.

In step S403, the CPU 71 determines whether or not an operation of adding glossary data is detected. This determination processing is, for example, processing of detecting the presence or absence of operation of a glossary addition button on the glossary list screen 58 in Fig. 8.

When detecting an operation of adding glossary data, the CPU 71 displays a glossary data addition screen in step S404.

For example, it is possible to perform an operation of inputting a title name of glossary data or the like on the glossary data addition screen. Furthermore, it is also possible to perform an operation of adding glossary data or an operation of canceling the addition. The CPU 71 performs processing corresponding to these operations as operation handling processing in step S405 in Fig. 38. Furthermore, in a case where glossary data is added, processing of storing the added glossary data in the storage unit 79 or the like is also a part of the handling processing.

After performing step S405, the CPU 71 displays the glossary list screen 58, and proceeds to the processing of step S403.

In a case where a glossary data addition operation is not detected in step S403, the CPU 71 determines whether or not an operation of editing the glossary data is detected in step S406. This determination processing is, for example, processing of detecting whether or not an operation has been performed on the edit button 117 provided in the glossary sub-menu dialog 59 illustrated in Fig. 9.

When detecting the editing operation of glossary data, the CPU 71 displays the glossary data edit screen 60 as illustrated in Fig. 10 in step S407, and proceeds to step S420 in Fig. 39. The processing performed by the CPU 71 on the glossary data edit screen 60 will be described later.

In a case where the editing operation of glossary data is not detected in step S406, the CPU 71 determines whether or not an operation of selecting glossary data is detected in step S408. The operation of selecting glossary data is an operation that can be performed on unselected glossary data, that is, glossary data in the OFF state, and is, for example, an operation of tapping the selection button 114 provided in the unselected glossary data or the like. Furthermore, an operation of pressing a selection button provided in the glossary sub-menu dialog 59 illustrated in Fig. 9 may be used.

In a case where the selection operation is detected, the CPU 71 performs selection processing in step S409. That is, the CPU 71 changes the display mode of the selection button 114 provided on the glossary list screen 58 from a mode indicating an unselected (OFF) state to a mode indicating a selected (ON) state.

In a case where the selection operation is not detected, the CPU 71 determines in step S410 whether or not a deselection operation is detected. The deselection operation is an operation that can be performed on selected glossary data, that is, glossary data in the ON state, and is, for example, an operation of tapping the selection button 114 provided in the selected glossary data. Furthermore, the operation may be pressing a non-selection button 116A which is an operation element provided instead of the selection button 116 in the glossary sub-menu dialog 59 illustrated in Fig. 9.

In a case where the deselection operation is detected, the CPU 71 performs deselection processing in step S411. That is, the display mode of the selection button 114 provided on the glossary list screen 58 is changed from the mode indicating the selected (ON) state to the mode indicating the unselected (OFF) state.

In a case where the deselection operation is not detected in step S410, the CPU 71 detects the presence or absence of a manual synchronization operation in step S412.

The manual synchronization operation may be a specific operation performed on the glossary list screen, or, although not illustrated in Fig. 8, an operation element for performing manual synchronization may be provided on the glossary list screen 58, and the manual synchronization operation may be an operation on the operation element.

When detecting the manual synchronization operation, the CPU 71 performs the glossary synchronization processing in step S402 described above.

In a case where the manual synchronization operation is not detected, the CPU 71 detects a page returning operation in step S413. In a case where the page returning operation is detected, the CPU 71 stores the updated glossary data on the basis of the operation performed on the glossary list screen 58 in step S414, and displays the image list screen 50 in step S201 of Fig. 33. That is, the screen transitions to the image list screen 50.

In a case where the page returning operation is not detected, the CPU 71 returns to the processing of step S403 again. In this manner, by sequentially performing the processing of steps S403, S406, S408, S410, S412, and S413, various operations by the user are detected.

Here, the processing performed by the CPU 71 on the above-described glossary data edit screen 60 (see Fig. 10) will be described with reference to Fig. 39.

In step S420, the CPU 71 determines whether or not an operation of adding term data is detected. The addition operation of term data is, for example, an operation on the term addition button 123 arranged on the glossary data edit screen 60 illustrated in Fig. 10.

When detecting a term data addition operation, the CPU 71 displays a term data addition screen in step S421. The term data addition screen is, for example, a screen in which each input field provided on the term data edit screen 63 illustrated in Fig. 12 is blank, and specifically, the word input field 128 and the reading input field 129 are blank.

After presenting the term data addition screen, the CPU 71 performs an edition handling processing for the user's editing operation in step S422. As the edition handling processing in step S422, for example, the CPU 71 performs processing of displaying the software keyboard 131 when the user performs a tap operation on the word input field 128 or the reading input field 129, processing of displaying an input character string in each input field according to an input operation from the software keyboard 131, or the like. Furthermore, processing of canceling addition of term data when the return button 127 is operated in a state where each input field is blank, processing of storing term data when the return button 127 is operated in a state where characters are input in each input field, and the like are also performed as the edition handling processing of step S422.

After performing the edition handling processing in step S422, the CPU 71 returns to the processing in step S420 again in response to the addition of the term data or the cancellation of the addition.

In a case where the term data addition operation is not detected, the CPU 71 determines whether or not a term data deletion operation is detected in step S423.

The term data deletion operation is, for example, an operation on a delete button 126 provided in the term sub-menu dialog 62 of Fig. 11.

When detecting a term data deletion operation, the CPU 71 deletes the term data in step S424.

On the other hand, in a case where the term data deletion operation is not detected, the CPU 71 determines whether or not a term data editing operation is detected in step S425.

The term data editing operation is, for example, an operation of tapping each piece of term data on the glossary data edit screen 60 of Fig. 10, an operation on the edit button 125 arranged on the term sub-menu dialog 62 of Fig. 11, or the like.

When detecting a term data editing operation, the CPU 71 performs edition handling processing in step S426.

The edition handling processing is, for example, processing similar to the processing of step S422.

In a case where the term data editing operation is not detected, the CPU 71 determines whether or not a page returning operation is detected in step S427.

The page returning operation is, for example, an operation on the return button 120 arranged on the glossary data edit screen 60.

When detecting a page returning operation, the CPU 71 performs processing of storing the current glossary data in step S428, performs processing of displaying the glossary list screen 58 in step S429, and then proceeds to step S401 in Fig. 38. Note that the processing may proceed to step S403 without performing the processing related to the automatic synchronization setting.

In a case where the page returning operation is not detected, the CPU 71 performs step S420 again. That is, the CPU 71 repeatedly performs a series of processing illustrated in Fig. 39 until the page returning operation is detected.

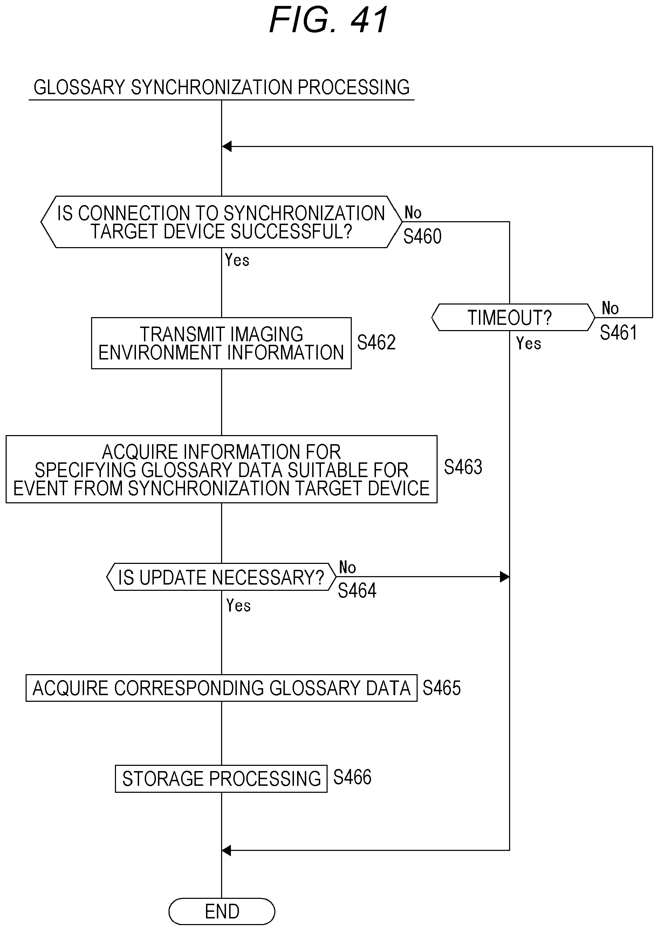

Here, a modification of the glossary synchronization processing illustrated in step S402 of Fig. 38 will be described with reference to Fig. 41.

In the modification of the glossary synchronization processing, the CPU 71 repeatedly performs steps S460 and S461 until the connection to the synchronization target device succeeds or times out.

These processing are similar to the processing in steps S440 and S441 in Fig. 40.

When the connection to the synchronization target device (hereinafter, described as "target device") is successful, the CPU 71 performs processing of transmitting imaging environment information to the target device in step S462.

Here, imaging environment information is imaging environment information for at least the image file PF received from the imaging device 1, and is information including at least one of the imaging date and time or the imaging place.

Imaging environment information may be assigned as metadata to the image file PF at the time of imaging by the imaging device 1, or may be specified by position information, reception date and time, or the like of the information processing device 2 that has received the image file PF from the imaging device 1.

The target device that has received the imaging environment information can estimate what kind of event the image file PF relates to from the imaging environment information. For example, in the case of the image file PF captured in a baseball stadium, it is possible to specify that the event to be captured is a baseball game and know information of the battle team.

Furthermore, by specifying the event, the target device can specify glossary data that seems to be able to be used for editing caption data to be assigned to the image file PF.

In step S463, the information processing device 2 acquires, from the target device, information for specifying the glossary data suitable for the event. Information for specifying glossary data may be, for example, glossary data itself received from the target device, or may be information such as identification (ID) that can specify the glossary data, so that the glossary data to be enabled can be determined.

By receiving any of these pieces of information, the CPU 71 can automatically perform acquisition and enablement processing of a glossary that the user will use from now on. Here, a case where an ID capable of specifying glossary data is received will be described.

In step S464, the CPU 71 determines whether or not it is necessary to update the glossary data. For example, in a case where the latest glossary data corresponding to the received ID is stored in the storage unit 79, it is determined that there is no need to update the glossary data, and the glossary synchronization processing illustrated in Fig. 41 is terminated.

On the other hand, in a case where the glossary data corresponding to the received ID is not stored or is not the latest data, the CPU 71 determines that it is necessary to update the glossary data, and acquires the glossary data in subsequent step S265.

In step S466, the CPU 71 stores the acquired glossary data, and terminates the glossary synchronization processing illustrated in Fig. 41.

As a result, for example, in a case where the glossary synchronization processing in Fig. 41 is automatically performed due to the automatic synchronization setting, the user automatically acquires glossary data that he/she desires to use or the optimal glossary data only by displaying the glossary list screen 58. Moreover, the glossary data can be enabled automatically.

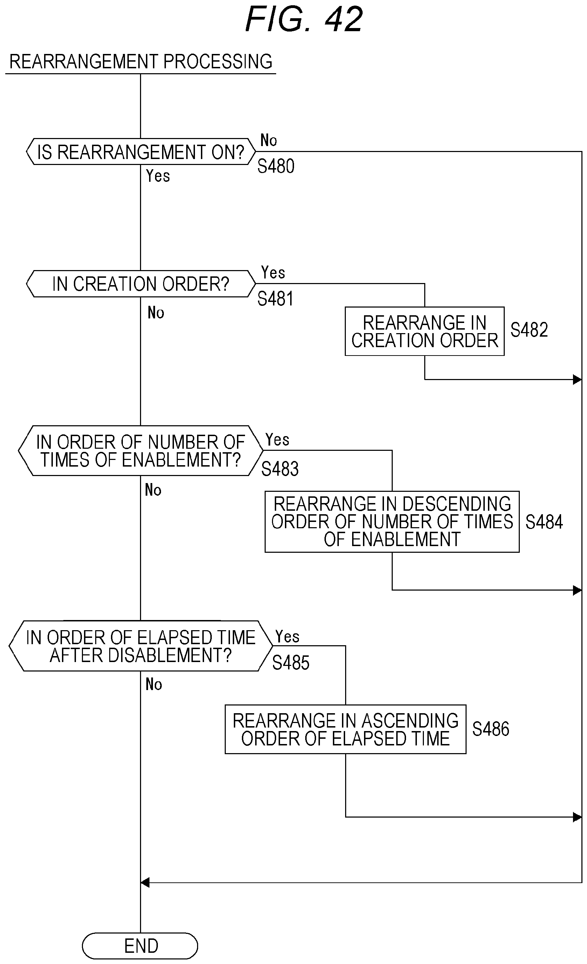

Finally, a specific example of the rearrangement processing in step S400 in Fig. 38 is illustrated in Fig. 42.

In step S480, the CPU 71 determines whether or not rearrangement can be performed. Whether or not rearrangement can be performed can be set by the user, for example, and information regarding rearrangement set by the user is stored in the storage unit 79, for example.

In a case where the rearrangement is turned off, the CPU 71 terminates the rearrangement processing.

On the other hand, in a case where the rearrangement is turned on, the CPU 71 determines what rearrangement is to be performed by the subsequent processing.

For example, in step S481, the CPU 71 determines whether or not to rearrange in the order of creation. The creation order may be in ascending order or descending order of the date and time when the glossary data was first created. Furthermore, the rearrangement may be based on the date and time of the last update.

The determination as to whether or not to rearrange the glossary data in the order of creation is based on information set by the user, for example. The setting information is stored in the storage unit 79, for example.

In a case where it is determined that the glossary data is to be rearranged in the order of creation, the CPU 71 performs processing of rearranging the glossary data in the order of creation in step S482. As a result, each piece of glossary data on the glossary list screen 58 is presented to the user in a rearranged state.

In a case where it is determined that the rearrangement of the glossary data is not to be based on the order of creation, the CPU 71 determines whether or not to rearrange the glossary data in order of the number of times of enablement in step S483.

The order of the number of times of enablement may be, for example, in descending order or ascending order of the number of times of enablement. Furthermore, instead of the number of times of enablement, the time lengths of enablement in descending order may be used.

In a case where it is determined that the glossary data is to be rearranged in order of the number of times of enablement, the CPU 71 performs processing of rearranging the glossary data in order of the number of times of enablement in step S484. As a result, each piece of glossary data on the glossary list screen 58 is presented to the user in a rearranged state.

In a case where it is determined that the rearrangement is not to be performed in the order of the number of times of enablement, the CPU 71 determines in step S485 whether or not the rearrangement is to be performed in the order of elapsed time after disablement.

In other words, the order of elapsed time after disablement means that the most recently enabled glossary data is displayed in a higher order. Furthermore, the glossary data in the currently enabled state may be displayed at the top by regarding the elapsed time as 0.

In a case where it is determined that the rearrangement is to be performed in order of elapsed time after disablement, the CPU 71 performs processing of rearranging in ascending order of the elapsed time in step S486. As a result, each piece of glossary data on the glossary list screen 58 is presented to the user in a rearranged state.

In a case where it is determined that the order is not the order of elapsed time after disablement, the CPU 71 terminates the rearrangement processing illustrated in Fig. 42. Note that, in the case of the "No" determination in step S483, the processing in step S486 may be performed without performing the processing in step S485.

Furthermore, the rearrangement conditions illustrated in Fig. 42 are examples, and rearrangement based on other conditions may be performed. For example, among the glossary data acquired from other information processing devices, the most recently acquired glossary data may be displayed at the top.

### <9. Summary and modification>

According to the above embodiments, the following effects can be obtained.

The information processing device 2 of the embodiment includes a user interface control unit (UI control unit 31) that performs user interface processing of enabling editing of text information as metadata to be added to an image file by using multiple pieces of glossary data that are an aggregate of term data in which character information and abbreviated input information (shortcut) form a set.

That is, multiple pieces of glossary data can be combined and used for editing metadata.

As a result, it is possible to provide a highly convenient editing environment intended by the user by creating multiple pieces of segmented glossary data and combining them.

Furthermore, in an environment in which only one selected glossary data is available, the common term data needs to be redundantly included in each piece of glossary data. However, in an environment in which multiple pieces of glossary data are available, a common term data is separated into one glossary data, whereby the common term data can be deleted from the subdivided more specialized glossary data. Accordingly, it is possible to downsize the glossary data. Furthermore, this can reduce the number of steps for creating the glossary data.

As described in the input handling processing of Fig. 36, the user interface control unit (UI control unit 31) may present character information that is an input candidate from glossary data, on the basis of input information input at the time of editing text information.

That is, character information corresponding to a case where the input information matches a part of the character information or a part of the abbreviated input information is presented as an input candidate.

As a result, the time required for editing text information can be shortened. Furthermore, by appropriately selecting the glossary data, even a term that is difficult to be presented as an input candidate (suggestion candidate), such as a term that is not normally used, is presented, so that the time required for editing text information can be shortened even more.

Furthermore, with respect to a language, such as Japanese, in which the character to be inserted into a caret position is determined by converting the input character, since character information as an input candidate is presented from glossary data, erroneous conversion into a homonym is prevented, and the editing speed can be improved.

As described in the configuration of the information processing device of Fig. 5, the glossary management unit 36 that acquires glossary data may be provided.

As a result, it is possible to acquire glossary data created by another information processing device, for example.

Accordingly, the glossary data can be used efficiently. Furthermore, since the glossary data created once can be used in multiple information processing devices, the system is highly convenient.

As described in the configuration of the information processing device in Fig. 5, the glossary management unit 36 may store and manage the glossary data in the storage unit 79.

As a result, even if the glossary data cannot be acquired from another information processing device due to a poor communication environment, the glossary data stored in the storage unit can be used.

Accordingly, the glossary data can be used for editing the text information regardless of the superiority or inferiority of the communication environment.

As described in the function of the information processing device 2, the glossary management unit 36 may manage the enabled state for each piece of glossary data.

As a result, it is possible to switch between enabled and disabled states for each piece of glossary data.

Accordingly, by disabling the glossary data that is not used, it is possible to prevent unnecessary input candidates from being presented.

As described in the rearrangement processing of Fig. 42, the user interface control unit 31 may perform processing of providing an environment for switching the enabled state of multiple pieces of glossary data, and perform processing of changing the display order of the multiple pieces of glossary data displayed in the environment in which the switching is performed.

As a result, the glossary data that is easy to use for the user can be displayed in a higher order.

Accordingly, the user can select appropriate glossary data, and can use the glossary data for editing text information.

As described in the rearrangement processing of Fig. 42, the display order may be in descending order of the number of times of enablement.

As a result, frequently used glossary data is displayed in a higher order in the list.

Accordingly, it is easy to switch the enabled state of frequently used glossary data, and convenience can be enhanced.

As described in the rearrangement processing of Fig. 42, the display order may be in ascending order of elapsed time after disablement.

As a result, the glossary data that has been enabled most recently is displayed in a higher order in the list.

Accordingly, it is easy to switch the enabled state of frequently used glossary data, and convenience can be enhanced.

As described in the glossary synchronization processing of Figs. 40 and 41, the glossary management unit 36 may acquire glossary data from a server device (other information processing device and target device) through the network 6.

As a result, glossary data can be acquired from a server device or the like located at a long distance where near field communication is not possible.

Accordingly, it is possible to provide a highly convenient environment for editing text information.

As described in the processing (Fig. 38) performed in a state where the glossary list screen 58 is displayed, the glossary management unit 36 may acquire glossary data on the basis of synchronization setting with the server device.

As a result, the glossary data stored in the server device is appropriately downloaded to the information processing device.

Accordingly, text information based on the glossary data stored in the server device can be edited, and convenience can be improved.

As described in the automatic synchronization setting dialog 65 (Fig. 28), the automatic synchronization setting and the manual synchronization setting may be provided as the synchronization setting.

As a result, the automatic synchronization setting and the manual synchronization setting can be switched according to the situation.

For example, by switching to the manual synchronization setting in a case where the radio wave condition is bad, it is possible to eliminate waste such as timeout of synchronization processing that is automatically performed.

As described in the glossary synchronization processing of Fig. 41, the glossary management unit 36 selects glossary data acquired from the server device on the basis of the position information.

As a result, for example, glossary data according to a place such as an event venue or a baseball stadium is acquired.

Accordingly, it is not necessary for the user to manually select the glossary and acquire the glossary from the server device, so that convenience can be improved.

As described in the glossary synchronization processing of Fig. 41, the glossary management unit 36 may select the glossary data acquired from the server device on the basis of the time information.

As a result, for example, appropriate glossary data is acquired according to time.

Furthermore, by selecting the glossary data to be acquired on the basis of both the time information and the position information, it is possible to specify the target event of the captured image with high probability, and thus, it is possible to smoothly edit the text information using the glossary data.

As described in the glossary synchronization processing of Fig. 40, the server device may be a shared server device.

As a result, for example, glossary data created by another user and stored in the server device can be used.

Accordingly, it is not necessary to take time to create the glossary data, and convenience can be improved. Furthermore, by acquiring and customizing glossary data created by another user, new glossary data can be easily created in a short time.

As described in the text conversion processing of Fig. 31, the user interface control unit 31 may perform processing of providing an environment in which audio data can be used for editing text information, and the glossary data is used in editing the text information using the audio data.

As a result, when audio data is converted into text information, conversion based on the glossary data is performed.

Accordingly, it is possible to reduce the possibility of erroneous conversion in conversion of a homonym or the like, and it is possible to reduce correction work after conversion. That is, it is possible to efficiently edit text information.

As described in the IPTC metadata of Fig. 3, text information may be information stored in a caption field of the IPTC metadata.

As a result, the glossary data can be used for editing the caption field of the IPTC metadata.

Although it is conceivable that the IPTC metadata is edited by the imaging device, the efficiency is poor due to the mode of the operation element of the imaging device. On the other hand, editing efficiency can be enhanced by editing with the information processing device. Editing can be performed in an even shorter time by using the glossary data, and convenience can be improved.

A program of the embodiment is a program for causing a CPU, a DSP, and the like, or a device including the CPU and the DSP, to perform the processing illustrated in Figs. 29 to 42.

In other words, the program of the embodiment is a program that causes an information processing device to perform user interface processing that enables editing of text information as metadata to be added to an image file by using multiple pieces of glossary data that are an aggregate of term data in which character information and abbreviated input information form a set.

With such a program, the information processing device 2 described above can be implemented, for example, in a mobile terminal device, a personal computer, or other equipment capable of performing information processing.

A program for implementing such an information processing device 2 can be recorded in advance in an HDD as a recording medium built in a device such as a computer device, a ROM in a microcomputer having a CPU, or the like.

Alternatively, the program can be stored (recorded) temporarily or permanently on a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from a removable recording medium to a personal computer or the like, or can be downloaded from a download site through a network such as a local area network (LAN) or the Internet.

Furthermore, such a program is suitable for providing the information processing device 2 of the embodiment in a wide range. For example, by downloading the program to a mobile terminal device such as a smartphone or a tablet, a mobile phone, a personal computer, a game device, a video device, a personal digital assistant (PDA), or the like, the smartphone or the like can be caused to function as the information processing device 2 of the present disclosure.

Note that the effect described in the present specification is merely an example and is not limited, and other effects can be obtained.

### <10. Present technology>

Note that the present technology can also be configured in the following manner.
(1) An information processing device including
   a user interface control unit that performs user interface processing of enabling editing of text information as metadata to be added to an image file by using multiple pieces of glossary data that are an aggregate of term data in which character information and abbreviated input information form a set.
(2) The information processing device according to (1) above, in which
   the user interface control unit presents the character information that is an input candidate from the glossary data on the basis of input information input at the time of editing the text information.
(3) The information processing device according to any one of (1) to (2) above further including
   a glossary management unit that acquires the glossary data.
(4) The information processing device according to (3) above, in which
   the glossary management unit stores and manages the glossary data in a storage unit.
(5) The information processing device according to any one of (3) to (4) above, in which
   the glossary management unit manages an enabled state of each piece of the glossary data.
(6) The information processing device according to (5) above, in which
   the user interface control unit
   performs processing of providing an environment for switching the enabled state of multiple pieces of the glossary data, and
   performs processing of changing a display order of multiple pieces of the glossary data displayed in the environment in which the switching is performed.
(7) The information processing device according to (6) above, in which
   the display order is set in descending order of the number of times of enablement.
(8) The information processing device according to (6) above, in which
   the display order is set in ascending order of elapsed time after disablement.
(9) The information processing device according to any one of (3) to (8) above, in which
   the glossary management unit acquires the glossary data from a server device through a network.
(10) The information processing device according to (9) above, in which
   the glossary management unit acquires the glossary data on the basis of a synchronization setting with the server device.
(11) The information processing device according to (10) above, in which
   an automatic synchronization setting and a manual synchronization setting are provided as the synchronization setting.
(12) The information processing device according to any one of (9) to (11) above, in which
   the glossary management unit selects the glossary data acquired from the server device on the basis of position information.
(13) The information processing device according to any one of (9) to (12) above, in which
   the glossary management unit selects the glossary data acquired from the server device on the basis of time information.
(14) The information processing device according to any one of (9) to (13) above, in which
   the server device is a shared server device.
(15) The information processing device according to any one of (1) to (14) above, in which
   the user interface control unit performs processing of providing an environment in which audio data is usable for editing the text information, and
   the glossary data is used in editing the text information using the audio data.
(16) The information processing device according to any one of (1) to (15) above, in which
   the text information is information stored in a caption field of IPTC metadata.
(17) An information processing method executed by an information processing device, the method including
   user interface processing of enabling editing of text information as metadata to be added to an image file by using multiple pieces of glossary data that are an aggregate of term data in which character information and abbreviated input information form a set.
(18) A program that causes an information processing device to execute
   user interface processing of enabling editing of text information as metadata to be added to an image file by using multiple pieces of glossary data that are an aggregate of term data in which character information and abbreviated input information form a set.

### REFERENCE SIGNS LIST

- 1: Imaging device
- 2: Information processing device
- 4: FTP server
- 6: Network
- 31: UI control unit
- 36: Glossary management unit
- 58: Glossary list screen
- 63: Term data edit screen
- 71: CPU
- 79: Storage unit
- PF: Image file

## Claims

1. An information processing device comprising
a user interface control unit that performs user interface processing of enabling editing of text information as metadata to be added to an image file by using a plurality of pieces of glossary data that is an aggregate of term data in which character information and abbreviated input information form a set.

2. The information processing device according to claim 1, wherein
the user interface control unit presents the character information that is an input candidate from the glossary data on a basis of input information input at a time of editing the text information.

3. The information processing device according to claim 1 further comprising
a glossary management unit that acquires the glossary data.

4. The information processing device according to claim 3, wherein
the glossary management unit stores and manages the glossary data in a storage unit.

5. The information processing device according to claim 3, wherein
the glossary management unit manages an enabled state of each piece of the glossary data.

6. The information processing device according to claim 5, wherein
the user interface control unit
performs processing of providing an environment for switching the enabled state of a plurality of pieces of the glossary data, and
performs processing of changing a display order of a plurality of pieces of the glossary data displayed in the environment in which the switching is performed.

7. The information processing device according to claim 6, wherein
the display order is set in descending order of the number of times of enablement.

8. The information processing device according to claim 6, wherein
the display order is set in ascending order of elapsed time after disablement.

9. The information processing device according to claim 3, wherein
the glossary management unit acquires the glossary data from a server device through a network.

10. The information processing device according to claim 9, wherein
the glossary management unit acquires the glossary data on a basis of a synchronization setting with the server device.

11. The information processing device according to claim 10, wherein
an automatic synchronization setting and a manual synchronization setting are provided as the synchronization setting.

12. The information processing device according to claim 9, wherein
the glossary management unit selects the glossary data acquired from the server device on a basis of position information.

13. The information processing device according to claim 9, wherein
the glossary management unit selects the glossary data acquired from the server device on a basis of time information.

14. The information processing device according to claim 9, wherein
the server device is a shared server device.

15. The information processing device according to claim 1, wherein
the user interface control unit performs processing of providing an environment in which audio data is usable for editing the text information, and
the glossary data is used in editing the text information using the audio data.

16. The information processing device according to claim 1, wherein
the text information is information stored in a caption field of IPTC metadata.

17. An information processing method executed by an information processing device, the method including
user interface processing of enabling editing of text information as metadata to be added to an image file by using a plurality of pieces of glossary data that is an aggregate of term data in which character information and abbreviated input information form a set.

18. A program that causes an information processing device to execute
user interface processing of enabling editing of text information as metadata to be added to an image file by using a plurality of pieces of glossary data that is an aggregate of term data in which character information and abbreviated input information form a set.
